# EUROPÄISCHE PATENTSCHRIFT

(11) **EP 3 934 178 B1**
(45) Veröffentlichungstag und Bekanntmachung des Hinweises auf die Patenterteilung: **03.04.2024**
(21) Anmeldenummer: 21181107.0
(22) Anmeldetag: 23.06.2021
(51) Int. Cl.: H04L 12/40, G05B 19/02, G05B 19/042

(54) **REDUNDANTES BUSSYSTEM FÜR EINE PROZESSANLAGE**
REDUNDANT BUS SYSTEM FOR A PROCESS INSTALLATION
SYSTÈME DE BUS REDONDANT POUR UNE INSTALLATION DE PROCESSUS

(30) Priorität: 03.07.2020 DE 102020117632
(43) Veröffentlichungstag der Anmeldung: 05.01.2022
(73) Patentinhaber: Krohne Messtechnik GmbH, 47058 Duisburg (DE)
(72) Erfinder: Kuschnerus, Dirk, 47802 Krefeld (DE); Lemke, Lars, 47269 Duisburg (DE); Walbrecker, Sven, 46485 Wesel (DE)
(74) Vertreter: Gesthuysen Patentanwälte

(56) Entgegenhaltungen:
- EP-A1- 3 278 185
- DE-A1- 19 800 311
- DE-A1-102012 102 173

## Beschreibung

Die Erfindung betrifft ein Bussystem für eine Prozessanlage, mit einem Busnachrichten sendenden Erstbusteilnehmer und mit wenigstens einem Busnachrichten empfangenden Erstbusteilnehmer, wobei der sendende Erstbusteilnehmer und der empfangende Erstbusteilnehmer über einen ersten Datenbus miteinander verbunden sind, wobei der sendende Erstbusteilnehmer derart ausgestaltet ist, dass er Steuerbefehle an den empfangenden Erstbusteilnehmer aussendet, wobei der empfangende Erstbusteilnehmer derart ausgestaltet ist, dass er die Steuerbefehle des sendenden Erstbusteilnehmers ausführt.

Bussysteme der in Rede stehenden Art sind seit vielen Jahren überall dort im Einsatz, wo Sensoren und Aktoren in einem zu steuernden und zu beobachtenden technischen Prozess örtlich verteilt angeordnet sind und über einen gemeinsamen Datenbus miteinander in Kommunikationsverbindung stehen. Ganz überwiegend handelt es sich um Bussysteme mit seriellen Datenbussen, die in dem aufgezeigten Anwendungsfall als Feldbussysteme bezeichnet werden. Je nach technischem Gebiet (Prozessindustrie, Automotive, Gebäude usw.) haben sich Feldbussysteme etabliert, deren zugrundeliegende Protokolle bestimmte Vorzüge aufweisen. In der Prozessindustrie finden sich beispielsweise häufig auf den Standards HART, CANopen oder Profibus basierende Bussysteme, im automotiven Bereich CAN und bei Anwendungen mit zeitdeterministischem Anforderungen beispielsweise FlexRay oder TTP.

In Rede stehende Bussysteme zur Steuerung und Regelung von Vorgängen in Fahrzeugen sind beispielsweise aus den Druckschriften EP 3 278 185 A1, DE 198 00 311 A1 und DE 10 2012 102173 A1 bekannt.

In der Regel sind mehrere Busteilnehmer in einer Prozessanlage verbaut und über einen Datenbus verbunden und werden beispielsweise durch einen Busteilnehmer angesteuert, der also eine administrative Funktion aufweist. Die administrative Funktion kann beispielsweise in der Implementierung einer Anlagenregelung bestehen, bei der der administrative Busteilnehmer Steuerbefehle an andere Busteilnehmer des Bussystems verschickt. Dieses Verständnis liegt den hier verwendeten Bezeichnungen zugrunde, wenn von einem sendenden Erstbusteilnehmer und wenigstens einem empfangenden Erstbusteilnehmer die Rede ist. Der sendende Erstbusteilnehmer hat demnach die Funktion des administrativen Busteilnehmers und sendet Steuerbefehle über den ersten Datenbus an die empfangenden Erstbusteilnehmer. Das schließt nicht aus, dass der sendende Erstbusteilnehmer darüberhinaus nicht auch Nachrichten über den ersten Datenbus von anderen Erstbusteilnehmern empfängt, beispielsweise Sensorwerte. Die empfangenden Erstbusteilnehmer empfangen die an sie gerichteten Steuerbefehle. Dies schließt auch nicht aus, dass die empfangenden Erstbusteilnehmer über den Empfang von Steuerbefehlen hinaus nicht auch selbst Busnachrichten über den ersten Datenbus aussenden. Wichtig ist, dass es im Störungsfall des administrativen Busteilnehmers, also des sendenden Erstbusteilnehmers, zu einer massiven Beeinträchtigung der Prozessanlage kommt, da die empfangenden Erstbusteilnehmer nicht mehr angesteuert werden. In der Regel geht damit ein vollständiger Ausfall der Prozessanlage einher.

Im Stand der Technik ist es bekannt, die mit einer Störung des sendenden Erstbusteilnehmers einhergehende Ausfallwahrscheinlichkeit zu reduzieren, indem der sendende Erstbusteilnehmer redundant ausgeführt wird; dies ist mit hohen Kosten verbunden.

Der Erfindung liegt entsprechend die Aufgabe zugrunde, ein Bussystem bereitzustellen, das in besonderer Art und Weise ausfallsicher ausgestaltet ist.

Die Aufgabe ist bei dem erfindungsgemäßen Bussystem mit den Merkmalen des Patentanspruchs 1 gelöst.

Das erfindungsgemäße Bussystem zeichnet sich dadurch aus, dass ein sendender Zweitbusteilnehmer und wenigstens ein empfangender Zweitbusteilnehmer vorhanden sind. Der sendende Zweitbusteilnehmer und der empfangende Zweitbusteilnehmer sind über einen zweiten Datenbus miteinander verbunden. Ferner ist der sendende Zweitbusteilnehmer derart ausgestaltet, dass er Steuerbefehle an den empfangenden Zweitbusteilnehmer aussendet, der empfangende Zweitbusteilnehmer hingegen ist derart ausgestaltet, dass er die Steuerbefehle des sendenden Zweitbusteilnehmers ausführt.

Der sendende Erstbusteilnehmer und der sendende Zweitbusteilnehmer sind über einen Überwachungskommunikationskanal miteinander verbunden und derart ausgestaltet, dass sie sich gegenseitig funktionsüberwachen. Der erste Datenbus und der zweite Datenbus sind über eine durch wenigstens eine Schaltungseinheit steuerbare Schaltvorrichtung miteinander verbindbar und voneinander trennbar. Im Gutzustand des sendenden Erstbusteilnehmers und des sendenden Zweitbusteilnehmers sind der erste Datenbus und der zweite Datenbus voneinander getrennt. Der Gutzustand ist hierbei der Zustand, in dem der sendende Erstbusteilnehmer und der sendende Zweitbusteilnehmer vorschriftsgemäß funktionsfähig sind und die empfangenden Busteilnehmer, nämlich den empfangenden Erstbusteilnehmer und den empfangenden Zweitbusteilnehmer ansteuern.

Weiter ist vorgesehen, dass die Schaltungseinheit derart ausgestaltet ist, dass sie im Störungszustand des sendenden Erstbusteilnehmers oder im Störungszustand des sendenden Zweitbusteilnehmers den ersten Datenbus und den zweiten Datenbus über die Schaltvorrichtung miteinander verbindet. Für den Fall, dass der sendende Zweitbusteilnehmer im Störungszustand ist, ist dann der funktionsfähige sendende Erstbusteilnehmer sowohl mit dem empfangenden Erstbusteilnehmer als auch mit dem empfangenden Zweitbusteilnehmer über die verbundenen Datenbusse verbunden. Für den Fall, dass der sendende Erstbusteilnehmer im Störungszustand ist, ist dann der funktionsfähige sendende Zweitbusteilnehmer sowohl mit dem empfangenden Zweitbusteilnehmer als auch mit dem empfangenden Erstbusteilnehmer über die verbundenen Datenbusse verbunden.

Zudem sind der funktionsfähige sendende Erstbusteilnehmer und der funktionsfähige sendende Zweitbusteilnehmer derart ausgestaltet, dass sie im Störungszustand des jeweils anderen sendenden Busteilnehmers Steuerbefehle sowohl an den empfangenden Erstbusteilnehmer als auch an den empfangenden Zweitbusteilnehmer aussenden. Die empfangenden Busteilnehmer sind dann derart ausgestaltet, dass sie die Steuerbefehle des funktionsfähigen sendenden Busteilnehmers ausführen.

Erfindungsgemäß ist also erkannt worden, dass ein Bussystem dann besonders vorteilhaft und ausfallsicher realisiert werden kann, wenn es in zumindest zwei Bussegmente, nämlich ein Erstbussystem und ein Zweitbussystem, unterteilt wird. Im Störungszustand des sendenden Erstbusteilnehmers oder im Störungszustand des sendenden Zweitbusteilnehmers werden die beiden Datenbusse der beiden Bussegmente über die Schaltvorrichtung miteinander verbunden, sodass der funktionsfähige sendende Erstbusteilnehmer oder der funktionsfähige sendende Zweitbusteilnehmer die Ansteuerung sämtlicher empfangender Busteilnehmer übernehmen kann. Die empfangenden Busteilnehmer sind dann so ausgebildet, dass sie die Steuerbefehle jedes sendenden Erstbusteilnehmers ausführen können. Eine Kommunikation zwischen einem sendenden Erstbusteilnehmer und einem empfangenden Zweitbusteilnehmer ist dann beispielsweise möglich.

In einer alternativen Ausgestaltung ist die Aufgabe bei dem Bussystem mit den Merkmalen des Patentanspruchs 2 gelöst.

Auch hier ist ein sendender Zweitbusteilnehmer und wenigstens ein empfangender Zweitbusteilnehmer vorhanden. Der sendende Zweitbusteilnehmer und der empfangende Zweitbusteilnehmer sind über einen zweiten Datenbus miteinander verbunden. Der sendende Zweitbusteilnehmer ist derart ausgestaltet, dass er Steuerbefehle an den empfangenden Zweitbusteilnehmer aussendet und der empfangende Zweitbusteilnehmer ist derart ausgestaltet, dass er Steuerbefehle des sendenden Zweitbusteilnehmers ausführt.

Weiter ist bei dieser Ausgestaltung vorgesehen, dass der sendende Erstbusteilnehmer und der sendende Zweitbusteilnehmer über einen Überwachungskommunikationskanal mit einem sendenden Ersatzbusteilnehmer verbunden sind. Der sendende Erstbusteilnehmer und der sendende Zweitbusteilnehmer können hierbei über jeweils einen Überwachungskommunikationskanal mit dem sendenden Ersatzbusteilnehmer verbunden sein oder über jeweils einen eigenen Überwachungskommunikationskanal mit dem sendenden Ersatzbusteilnehmer verbunden sein. Beide Varianten sind umfasst, wenn es heißt, dass der sendende Erstbusteilnehmer und der sendende Zweitbusteilnehmer über einen Überwachungskommunikationskanal mit einem sendenden Ersatzbusteilnehmer verbunden sind. Ferner ist der sendende Ersatzbusteilnehmer derart ausgestaltet, dass er den sendenden Erstbusteilnehmer und den sendenden Zweitbusteilnehmer funktionsüberwacht,

Der erste Datenbus und der zweite Datenbus sind über eine durch wenigstens eine Schaltungseinheit steuerbare Schaltvorrichtung miteinander verbindbar und voneinander trennbar. Im gleichzeitigen Gutzustand des sendenden Erstbusteilnehmers und des sendenden Zweitbusteilnehmers sind auch bei dieser erfindungsgemäßen Ausgestaltung der erste Datenbus und der zweite Datenbus voneinander getrennt.

Erfindungsgemäß ist weiter vorgesehen, dass die Schaltungseinheit derart ausgestaltet ist, dass sie im Störungszustand des sendenden Erstbusteilnehmers oder im Störungszustand des sendenden Zweitbusteilnehmers den ersten Datenbus und den zweiten Datenbus über die Schaltvorrichtung miteinander verbindet, sodass der sendende Ersatzbusteilnehmer über den Überwachungskommunikationskanal, den funktionsfähigen sendenden Erstbusteilnehmer, den ersten Datenbus und den zweiten Datenbus mit dem empfangenden Busteilnehmer des im Störungszustand befindlichen sendenden Busteilnehmers verbunden ist, und dass der sendende Ersatzbusteilnehmer derart ausgestaltet ist, dass er im Störungszustand des sendenden Erstbusteilnehmers Steuerbefehle an den empfangenden Erstbusteilnehmer aussendet oder im Störungszustand des sendenden Zweitbusteilnehmers Steuerbefehle an den empfangenden Zweitbusteilnehmer aussendet.

In einer besonders bevorzugten Ausgestaltung der erfindungsgemäßen Bussysteme sind der empfangende Erstbusteilnehmer und der empfangende Zweitbusteilnehmer derart ausgestaltet, dass sie Zustandsdaten über ihren aktuellen Betriebszustand oder die Prozessumgebung charakterisierende Daten an die jeweiligen sendenden Prozessteilnehmer senden. Die Prozessumgebung charakterisierende Daten können beispielsweise Daten sein, die die am Ort des jeweiligen Busteilnehmers vorherrschende Temperatur oder den an dem Ort des jeweiligen Busteilnehmers vorherrschenden Druck beschreiben. Die den aktuellen Betriebszustand eines Busteilnehmers beschreibende Zustandsdaten können beispielsweise solche Daten sein, die momentane Einstellungen des Busteilnehmers beschreiben. Ist das Bussystem beispielsweise in einer Abfüllanlage zum Abfüllen von fließfähigen Medien in Behälter implementiert und ist beispielsweise ein empfangender Busteilnehmer als Füllventil ausgebildet, dann kann mittels der Zustandsdaten beispielsweise der Öffnungsgrad des Füllventils beschrieben werden.

Der empfangende Erstbusteilnehmer und der empfangende Zweitbusteilnehmer sind ferner derart ausgestaltet, dass sie im Störungszustand des sendenden Erstbusteilnehmers oder im Störungszustand des sendenden Zweitbusteilnehmers das Senden der Zustandsdaten oder der die Prozessumgebung charakterisierenden Daten zumindest teilweise einstellen. Hierdurch wird erreicht, dass die Bandbreite der miteinander verbundenen Datenbusse in erster Linie zur Ansteuerung der empfangenden Busteilnehmer, nämlich zum Senden der Steuerbefehle, verwendet werden kann. Da der funktionsfähige sendende Busteilnehmer über den Datenbus, bzw. die miteinander verbundenen ersten und zweiten Datenbusse nun sämtliche empfangenden Busteilnehmer ansteuern muss, oder da der funktionsfähige sendende Busteilnehmer und der sendende Ersatzbusteilnehmer zumindest teilweise über den gleichen Datenbus die empfangenden Busteilnehmer ansteuern, muss hierfür eine größere Bandbreite genutzt werden. Das Senden sämtlicher sekundärer Daten, wobei sekundäre Daten hier solche Daten sind, die zur Ansteuerung der Busteilnehmer und damit für den grundsätzlichen Betrieb der Prozessanlage, nicht zwingend notwendig sind, kann reduziert oder vollkommen eingestellt werden, um den Datenbus nicht unnötig auszulasten.

Das Einstellen oder Reduzieren des Sendens der Zustandsdaten oder der die Prozessumgebung charakterisierenden Daten durch den empfangenden Erstbusteilnehmer und/oder dem empfangenden Zweitbusteilnehmer kann unterschiedlich realisiert werden. In einer ersten Ausgestaltung sind der sendende Erstbusteilnehmer und der sendende Zweitbusteilnehmer oder der sendende Ersatzbusteilnehmer derart ausgestaltet, dass sie im Störungszustand eines sendenden Busteilnehmers den empfangenden ersten Busteilnehmer und/oder den empfangenden Zweitbusteilnehmer zum Einstellen oder zum zumindest teilweise Reduzieren des Sendens der Zustandsdaten oder der die Prozessumgebung charakterisierenden Daten auffordern. Diese Aufforderung wird dann in Form eines Steuerbefehls über die verbundenen Datenbusse an den empfangenden Erstbusteilnehmer und an den empfangenden Zweitbusteilnehmer kommuniziert.

In einer alternativen Ausgestaltung ist vorgesehen, dass der empfangende Erstbusteilnehmer und der empfangende Zweitbusteilnehmer derart ausgestaltet sind, dass sie selbstständig den Störungszustand des sendenden Erstbusteilnehmers oder des sendenden Zweitbusteilnehmers erkennen und daraufhin das Senden der Zustandsdaten oder der die Prozessumgebung charakterisierenden Daten zumindest teilweise oder vollständig einstellen.

Das selbstständige Erkennen eines Störungszustandes des sendenden Erstbusteilnehmers oder des sendenden Zweitbusteilnehmers durch den oder die empfangenden Busteilnehmer kann auf unterschiedliche Art und Weise realisiert werden.

In einer Variante senden die sendenden Busteilnehmer in festen Zeitintervallen ein Funktionsssignal an die empfangenden Busteilnehmer, die dieses Signal empfangen. Beim Ausbleiben des Empfangens des Funktionssignals wird darauf geschlossen, dass der sendende Busteilnehmer kein Funktionsssignal ausgesandt hat und sich entsprechend in einem Fehlerzustand befinden muss.

In einer anderen Variante senden die empfangenden Busteilnehmer eine Anfrage an die sendenden Busteilnehmer. Beim Ausbleiben einer Antwort auf die gesendete Anfrage wird darauf geschlossen, dass der entsprechende sendende Busteilnehmer in einem Fehlerzustand ist. Das Senden der Anfrage wird bevorzugt in vorgegebenen Zeitintervallen wiederholt.

Oben ist ausgeführt worden, dass der sendende Erstbusteilnehmer und der sendende Zweitbusteilnehmer über einen Überwachungskommunikationskanal miteinander verbunden sind und derart ausgestaltet sind, dass sie sich gegenseitig funktionsüberwachen. Der Überwachungskommunikationskanal kann hierbei als analoger oder digitaler Kommunikationskanal realisiert sein. Ferner kann der Kommunikationskanal als drahtloser oder drahtgebundener Kommunikationskanal realisiert sein. Auch bei der Variante des Bussystems, die einen sendenden Ersatzbusteilnehmer aufweist, kann der Überwachungskommunikationskanal entsprechend realisiert sein.

Die gegenseitige Funktionsüberwachung des sendenden Erstbusteilnehmers und des sendenden Zweitbusteilnehmers oder des sendenden Ersatzbusteilnehmers und des sendenden Erstbusteilnehmers oder sendenden Zweitbusteilnehmers kann ebenfalls in unterschiedlicher Art und Weise realisiert sein. In einer besonders bevorzugten Ausgestaltung sendet der sendende Erstbusteilnehmer in zeitlich regelmäßigen Abständen ein Funktionssignal an den sendenden Zweitbusteilnehmer bzw. den sendenden Ersatzbusteilnehmer. Ebenfalls sendet der sendende Zweitbusteilnehmer in zeitlich regelmäßigen Abständen, bevorzugt in dem gleichen zeitlichen Abstand, ein Funktionssignal an den sendenden Erstbusteilnehmer bzw. den sendenden Ersatzbusteilnehmer. Beim Ausbleiben des Sendens des Funktionssignals erkennt der andere Busteilnehmer bzw. der sendende Ersatzbusteilnehmer, dass hier ein Störungszustand vorliegt. In einer alternativen Ausgestaltung fordert der sendende Erstbusteilnehmer bzw. der sendende Ersatzbusteilnehmer in regelmäßigen zeitlichen Abständen den sendenden Zweitbusteilnehmer zur Aussendung eines Funktionssignals auf. Ebenfalls fordert der sendende Zweitbusteilnehmer bzw. der sendende Ersatzbusteilnehmer in zeitlich regelmäßigen Abständen den sendenden Erstbusteilnehmer zur Aussendung eines Funktionssignals auf. Reagiert der angefragte Busteilnehmer nicht, so liegt ebenfalls ein Störungszustand vor, der von dem anfragenden Busteilnehmer erkannt wird.

Die Schaltungseinheit dient wie zuvor ausgeführt dazu, den ersten Datenbus und den zweiten Datenbus über die Schaltvorrichtung miteinander zu verbinden. In einer ersten Ausgestaltung wird die Schaltungseinheit durch einen eigenständigen Busteilnehmer des Bussystems realisiert.

Der separate Busteilnehmer ist in einer Variante mit dem Überwachungskommunikationskanal verbunden. In einer alternativen Variante ist die als separater Busteilnehmer realisierte Schaltungseinheit über jeweils einen Kanal mit dem sendenden Erstbusteilnehmer und mit dem sendenden Zweitbusteilnehmer verbunden.

In einer weiteren Ausgestaltung der erfindungsgemäßen Bussysteme sind ein moderierender Erstbusteilnehmer und ein moderierender Zweitbusteilnehmer vorgesehen. Der moderierende Erstbusteilnehmer moderiert die Kommunikation zwischen dem sendenden Erstbusteilnehmer und dem empfangenden Erstbusteilnehmer. Der moderierende Zweitbusteilnehmer moderiert die Kommunikation zwischen dem sendenden Zweitbusteilnehmer und dem empfangenden Zweitbusteilnehmer.

Im Störungszustand des sendenden Erstbusteilnehmers wird der moderierende Erstbusteilnehmer deaktiviert und übernimmt der moderierende Zweitbusteilnehmer die Moderation der Kommunikation zwischen dem sendenden Zweitbusteilnehmer und dem empfangenden Erstbusteilnehmer. Im Störungszustand des sendenden Zweitbusteilnehmers wird der moderierende Zweitbusteilnehmer deaktiviert und übernimmt der moderierende Erstbusteilnehmer die Moderation der Kommunikation zwischen dem sendenden Erstbusteilnehmer (2) und dem empfangenden Zweitbusteilnehmer.

In einer Variante sind der moderierende Erstbusteilnehmer und der moderierende Zweitbusteilnehmer als separate Busteilnehmer bzw. Bauteile realisiert.

In einer weiteren Variante sind der moderierende Erstbusteilnehmer und der moderierende Zweitbusteilnehmer in der Schaltungseinheit vorgesehen.

In einer anderen Variante ist der moderierende Erstbusteilnehmer in dem sendenden Erstbusteilnehmer implementiert und ist der moderierende Zweitbusteilnehmer in dem sendenden Zweitbusteilnehmer implementiert.

In einer besonders bevorzugten Ausgestaltung der erfindungsgemäßen Bussysteme ist eine zweite Schaltungseinheit vorgesehen. Die erste Schaltungseinheit ist hierbei im sendenden Erstbusteilnehmer implementiert und die zweite Schaltungseinheit ist im sendenden Zweitbusteilnehmer implementiert.

Die Verbindung der beiden Schaltungseinheiten mit der Schaltvorrichtung ist bei dieser Ausgestaltung in verschiedenen Varianten realisiert:
In einer ersten Variante sind die erste Schaltungseinheit und die zweite Schaltungseinheit über jeweils einen Schaltkanal mit der Schaltvorrichtung verbunden und schalten die Schaltvorrichtung über den jeweiligen Schaltkanal.

In einer alternativen zweiten Variante ist die Schaltvorrichtung mit dem Überwachungskommunikationskanal verbunden und die erste Schaltungseinheit und die zweite Schaltungseinheit schalten die Schaltvorrichtung über den Überwachungskommunikationskanal.

In einer alternativen dritten Variante schaltet die erste Schaltungseinheit die Schaltvorrichtung über den ersten Datenbus und schaltet die zweite Schaltungseinheit die Schaltvorrichtung über den zweiten Datenbus.

Die Schaltungseinheit selbst kann in verschiedener Art und Weise realisiert sein. Wie zuvor ausgeführt worden ist, ist die Schaltungseinheit derart ausgestaltet, dass sie im Störungszustand des sendenden Erstbusteilnehmers oder des sendenden Zweitbusteilnehmers den ersten Datenbus und den zweiten Datenbus über die Schaltvorrichtung miteinander verbindet. Sind zwei Schaltungseinheiten vorgesehen, so erfüllen beide Schaltungseinheiten unabhängig voneinander diese Aufgabe. Die nachfolgenden Ausgestaltungen können für jede der beiden Schaltungseinheiten realisiert sein. Die Ausgestaltungen werden jedoch - nicht einschränkend - nur für eine Schaltungseinheit ausgeführt.

Damit die Schaltungseinheit die Schaltungsvorrichtung zum Verbinden des ersten Datenbusses und des zweiten Datenbusses im Störungszustand eines der sendenden Busteilnehmers schalten kann, ist es notwendig, dass die Schaltungseinheit den Zustand des sendenden Erstbusteilnehmers und den Zustand des sendenden Zweitbusteilnehmers selbstständig erkennt oder Informationen über die Zustände des sendenden Erstbusteilnehmers und des sendenden Zweitbusteilnehmers erlangt. In einer ersten Ausgestaltung ist entsprechend vorgesehen, dass die Schaltungseinheit derart ausgestaltet ist, dass sie selbstständig den Störungszustand des sendenden Erstbusteilnehmers oder des sendenden Zweitbusteilnehmers erkennt. Dies ist in einer Variante so realisiert, dass der sendende Erstbusteilnehmer und der sendende Zweitbusteilnehmer in zeitlich regelmäßigen Abständen ein Funktionssignal an die Schaltungseinheit aussenden. Beim Ausbleiben dieses Aussendens erkennt die Schaltungseinheit, dass ein Störungszustand vorliegt. In einer zweiten Variante ist die Schaltungseinheit derart realisiert, dass sie den sendenden Erstbusteilnehmer und den sendenden Zweitbusteilnehmer zur Aussendung eines Zustandssigals auffordert. Reagieren der sendende Erstbusteilnehmer oder der sendende Zweitbusteilnehmer nicht auf diese Aufforderung, so erkennt die Schaltungseinheit, dass ein Störungszustand des nicht reagierenden sendenden Busteilnehmers vorliegt.

In einer anderen Ausgestaltung sind der sendende Erstbusteilnehmer und der sendende Zweitbusteilnehmer derart ausgestaltet, dass sie im Störungszustandes eines der sendenden Busteilnehmer ein Störungssignal an die Schaltungseinheit senden. Bei der Variante des Bussystems mit dem sendenden Ersatzbusteilnehmers kann alternativ oder zusätzlich der sendende Ersatzbusteilnehmer derart ausgestaltet sein, dass er im Störungszustand eines der sendenden Busteilnehmer ein Störungssignal an die Schaltungseinheit sendet. Den Störungszustand des jeweils anderen sendenden Busteilnehmers erkennt ein sendender Busteilnehmer wie oben beschrieben dadurch, dass sich die beiden sendenden Busteilnehmer über den Überwachungskommunikationskanal funktionsüberwachen bzw. dass der sendende Ersatzbusteilnehmer die anderen sendenden Busteilnehmer über den Überwachungskommunikationskanal funktionsüberwacht. Erkennt also einer der sendenden Busteilnehmer oder der Ersatzbusteilnehmer, dass der andere sendende Busteilnehmer im Störungszustand ist, so sendet er ein entsprechendes Störungssignal an die Schaltungseinheit.

In einer alternativen Ausgestaltung des erfindungsgemäßen Bussystems ist vorgesehen, dass eine zweite Schaltungseinheit und eine zweite Schaltvorrichtung vorgesehen sind, wobei die erste Schaltungseinheit und die erste Schaltvorrichtung in dem sendenden Erstbusteilnehmer implementiert sind und die zweite Schaltungseinheit und die zweite Schaltvorrichtung in dem sendenden Zweitbusteilnehmer implementiert sind. Der sendende Erstbusteilnehmer ist dann über die erste Schaltvorrichtung mit dem zweiten Datenbus verbindbar und von dem zweiten Datenbus trennbar. Der sendende Zweitbusteilnehmer ist dann über die zweite Schaltvorrichtung mit dem ersten Datenbus verbindbar und von dem ersten Datenbus trennbar. So wird insgesamt eine Redundanz in der Schaltungseinheit realisiert, was die Ausfallsicherheit des erfindungsgemäßen Bussystems erheblich erhöht.

Ist eine Schaltungseinheit als separater Busteilnehmer realisiert, so kann in einer Ausgestaltung die Schaltvorrichtung in der Schaltungseinheit realisiert sein.

Wie ausgeführt, ist erfindungsgemäß vorgesehen, dass im Störungszustand des sendenden Zweitbusteilnehmers der sendende Erstbusteilnehmer die Ansteuerung des ursprünglich von dem sendenden Zweitbusteilnehmer angesteuerten empfangenden Zweitbusteilnehmers übernimmt und umgekehrt. Damit der sendende Erstbusteilnehmer sämtliche zur Ansteuerung des empfangenden Zweitbusteilnehmers notwendigen Informationen - beispielsweise Daten zur Konfiguration des empfangenden Zweitbusteilnehmers oder Daten zur Steuerung - Steuerbefehle - des empfangenden Zweitbusteilnehmers oder aber auch Charakterisierungsinformationen zur Art des empfangenden Zweitbusteilnehmers - zugänglich hat - und umgekehrt der sendende Zweitbusteilnehmer sämtliche zur Ansteuerung des empfangenden Erstbusteilnehmers notwendigen Informationen zugänglich hat -, ist in einer besonders bevorzugten Ausgestaltung des erfindungsgemäßen Bussystems vorgesehen, dass der sendende Erstbusteilnehmer und der sendende Zweitbusteilnehmer derart ausgestaltet sind, dass sie bei einer Initialisierung des Bussystems Daten zur Konfiguration und/oder zur Steuerung der empfangenden Busteilnehmer und/oder Charakterisierungsinformationen der empfangenden Busteilnehmer über den ersten Datenbus und den zweiten Datenbus austauschen. Hierzu sind der erste Datenbus und der zweite Datenbus über die Schaltvorrichtung miteinander verbunden.

Eine Initialisierung des Bussystems erfolgt in der Regel vor der Inbetriebnahme des Bussystems, also bevor die Prozessanlage den Prozess aufnimmt oder wiederaufnimmt. Ferner ist die Schaltungseinheit derart ausgestaltet ist, dass sie nach dem Austausch der Daten den ersten Datenbus und den zweiten Datenbus über die Schaltvorrichtung trennt. Während des laufenden Prozesses tauschen die sendenden Busteilnehmer dann bevorzugt keine weiteren Daten zur Konfiguration und/oder zur Steuerung der empfangenden Busteilnehmer und/oder Charakterisierungsinformationen der empfangenden Busteilnehmer aus. Hierdurch ergibt sich der Vorteil, dass im Störungsfall eines der sendenden Busteilnehmers der andere sendende Busteilnehmer den gemeinsamen Betrieb der beiden Bussegmente direkt gewährleisten kann, da ihm alle notwendigen Information vorliegen.

In einer alternativen Ausgestaltung des erfindungsgemäßen Bussystems sind der sendende Erstbusteilnehmer und der sendende Zweitbusteilnehmer derart ausgestaltet, dass sie bei einer Initialisierung des Bussystems und/oder während des Betriebs des Bussystems, also während des laufenden Prozesses Daten zur Konfiguration und/oder zur Steuerung der empfangenden Busteilnehmer und/oder Charakterisierungsinformationen der empfangenden Busteilnehmer über den Überwachungskommunikationskanal austauschen. Diese Ausgestaltung weist den Vorteil auf, dass ein Austausch des sendenden Erstbusteilnehmers und des sendenden Zweitbusteilnehmers auch bei getrennten Datenbussen möglich ist.

Bei der Variante des erfindungsgemäßen Bussystems, die einen sendenden Ersatzbusteilnehmer aufweist, ist vorgesehen, dass der sendende Erstbusteilnehmer und der sendende Zweitbusteilnehmer derart ausgestaltet sind, dass sie bei der Initialisierung des Bussystems und/oder im laufenden Betrieb des Bussystems Daten zur Konfiguration und/oder zur Steuerung der empfangenden Busteilnehmer und/oder Charakterisierungsinformationen der empfangenden Busteilnehmer über den Überwachungskommunikationskanal an den sendenden Ersatzbusteilnehmer senden.

Um auch bei einem Zusammenschluss der beiden Bussegmente, nämlich im Störungszustand des sendenden Erstbusteilnehmers oder im Störungszustand des sendenden Zweitbusteilnehmers bei Verbindung des ersten Datenbusses und des zweiten Datenbusses die Auslastung der verbundenen Datenbusse gering zu halten bzw. die zur Verfügung stehende Bandbreite der verbundenen Datenbusse bestmöglich auszunutzen, ist in einer besonders bevorzugten Ausgestaltung des erfindungsgemäßen Bussystems vorgesehen,
dass der sendende Erstbusteilnehmer derart ausgestaltet ist, dass er im Störzutand des sendenden Zweitbusteilnehmer den empfangenden Zweitbusteilnehmer in einen Folgemodus versetzt, derart, dass der empfangende Zweitbusteilnehmer die an den empfangenden Erstbusteilnehmer gerichteten Steuerbefehle ausführt. Der sendende Zweitbusteilnehmer ist derart ausgestaltet, dass er im Störungszustand des sendenden Erstbusteilnehmers den empfangenden Zweitbusteilnehmer in einen Folgemodus versetzt, derart, dass der empfangende Erstbusteilnehmer die an den empfangenden Zweitbusteilnehmer gerichteten Steuerbefehle ausführt. Hierdurch können Ressourcen bei der Datenübertragung über den Datenbus reduziert werden, da nicht jeder empfangende Busteilnehmer separat angesteuert werden muss.

Um die Ausfallsicherheit der Bussysteme insgesamt zu erhöhen, ist in einer weiteren Ausgestaltung der erfindungsgemäßen Bussysteme vorgesehen, dass die Schaltungseinheit derart ausgestaltet ist, dass sie den ersten Datenbus und den zweiten Datenbus über die Schaltvorrichtung dann verbindet, wenn der sendende Erstbusteilnehmer oder der sendende Zweitbusteilnehmer in einem Fehlerzustand befindlich ist, eine angefragte Reaktion einer der beiden sendenden Busteilnehmer ausbleibt, oder einer der beiden sendenden Busteilnehmer ausgeschaltet wird. So wird eine "Fail-Safe" -Situation realisiert, die dazu dient, dass das Bussystem insgesamt in einen funktionsfähigen Zustand verbracht wird, nämlich durch Verbindung der beiden Datenbusse, sobald eine kritische Situation auftritt.

Sämtliche beschriebenen Ausgestaltungen sind auch dann realisierbar, wenn mehrere empfangende Erstbusteilnehmer und/oder mehrere empfangende Zweitbusteilnehmer vorgesehen sind. Die Ausführungen gelten für alle empfangenden Busteilnehmer entsprechend.

Die erfindungsgemäßen Bussysteme sind in einer besonders bevorzugten Variante als CAN-Bussysteme realisiert und verwenden das CANopen Protokoll. Die Erfindung ist jedoch nicht auf eine derartige Auslegung beschränkt, vielmehr können sämtliche bekannten Protokolle in den erfindungsgemäßen Bussystemen realisiert werden. Die Busteilnehmer sind entsprechend derart gewählt, dass sie das gewünschte Protokoll bedienen können.

Besonders bevorzugt wird zudem die Konfiguration der sendenden Busteilnehmer und/oder der Schaltungseinheit über die OPC Unified Arcitecture realisiert.

Im Einzelnen gibt es eine Vielzahl an Möglichkeiten, das erfindungsgemäße Bussystem auszugestalten und weiterzubilden. Hierzu wird verwiesen auf die dem Patentanspruch 1 nachgeordneten Patentansprüche sowie auf die Beschreibung bevorzugter Ausgestaltung in Verbindung mit der Zeichnung. In der Zeichnung zeigen
- Fig. 1: eine erste Ausgestaltung eines Bussystems im Gutzustand des sendenden Erstbusteilnehmers und des sendenden Zweitbusteilnehmers,
- Fig. 2: eine zweite Ausgestaltung eines Bussystems im Störungszustand des sendenden Zweitbusteilnehmers,
- Fig. 3: eine dritte Ausgestaltung eines Bussystems im Gutzustand des sendenden Erstbusteilnehmers und des sendenden Zweitbusteilnehmers,
- Fig. 4: eine vierte Ausgestaltung eines Bussystems im Gutzustand des sendenden Erstbusteilnehmers und des sendenden Zweitbusteilnehmers,
- Fig. 5: eine fünfte Ausgestaltung eines Bussystems im Gutzustand des sendenden Erstbusteilnehmers und des sendenden Zweitbusteilnehmers,
- Fig. 6: eine sechste Ausgestaltung eines Bussystems im Gutzustand des sendenden Erstbusteilnehmers und des sendenden Zweitbusteilnehmers, und
- Fig. 7: eine siebte Ausgestaltung eines Bussystems im Gutzustand des sendenden Erstbusteilnehmers und des sendenden Zweitbusteilnehmers.

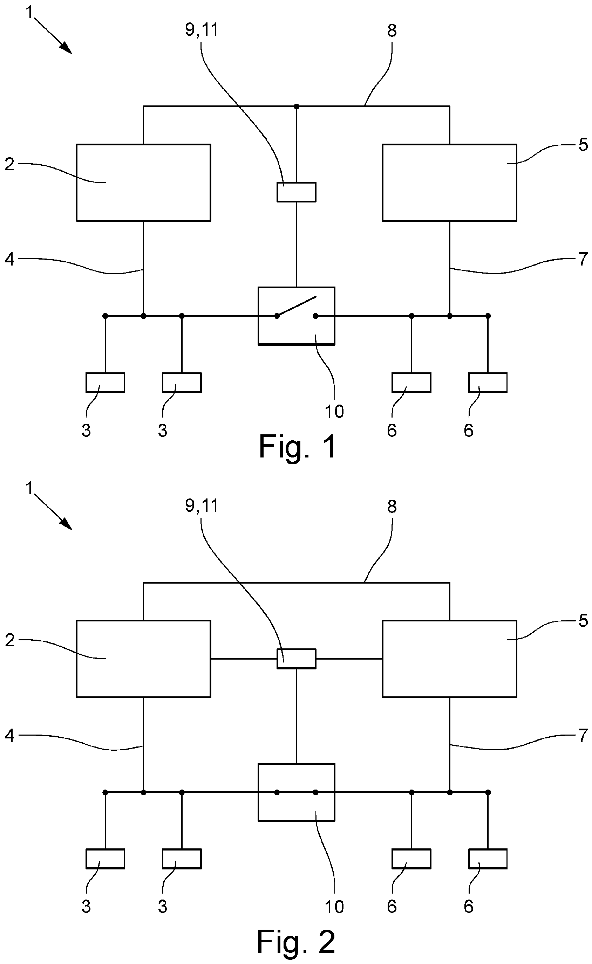

Fig. 1 zeigt eine schematische Darstellung einer ersten Ausgestaltung eines Bussystems 1 für eine nicht dargestellte Prozessanlage. Das Bussystem 1 weist einen sendenden Erstbusteilnehmer 2 und zwei empfangende Erstbusteilnehmer 3 auf. Der sendende Erstbusteilnehmer 2 ist in erster Linie dadurch charakterisiert, dass er Steuerbefehle über einen ersten Datenbus 4 an die empfangenden Erstbusteilnehmer 3 aussendet. Die empfangenden Erstbusteilnehmer 3 sind derart ausgestaltet, dass sie die Steuerbefehle des sendenden Erstbusteilnehmers 2 ausführen können bzw. ausführen. Weiter weist das Bussystem 1 einen sendenden Zweitbusteilnehmer 5 und zwei empfangende Zweitbusteilnehmer 6 auf. Der sendende Zweitbusteilnehmer 5 zeichnet sich dadurch aus, dass er Steuerbefehle über einen zweiten Datenbus 7 an die empfangenden Zweitbusteilnehmer 6 aussendet, die wiederum derart ausgestaltet sind, dass sie die Steuerbefehle des sendenden Zweitbusteilnehmers 5 ausführen.

Der sendende Erstbusteilnehmer 2 und der sendende Zweitbusteilnehmer 5 sind über einen Überwachungskommunikationskanal 8 miteinander verbunden. Zudem sind der sendende Erstbusteilnehmer 2 und der sendende Zweitbusteilnehmer 5 derart ausgebildet, dass sie sich gegenseitig funktionsüberwachen. Hierzu sendet der sendende Erstbusteilnehmer 2 in regelmäßigen Zeitabständen ein Funktionssignal an den sendenden Zweitbusteilnehmer 5 aus und sendet der sendende Zweitbusteilnehmer 5 in regelmäßigen Zeitabständen ein Funktionssignal an den sendenden Erstbusteilnehmer 2 aus. Beim Ausbleiben des Sendens des Funktionssignals erkennt der das Funktionssignal empfangende Busteilnehmer 2, 5, dass der das Funktionssignal aussendende Busteilnehmer 5, 2 funktionsgestört ist, sich also in einem Störungszustand befindet.

Das Bussystem 1 weist eine Schaltungseinheit 9 auf, die eine Schaltvorrichtung 10 steuert. Über die Schaltvorrichtung 10 können der erste Datenbus 4 und der zweite Datenbus 7 miteinander verbunden werden. Bei der in Fig. 1 dargestellten Ausgestaltung ist die Schaltungseinheit 9 als separater Busteilnehmer 11 ausgebildet. Befinden sich der sendende Erstbusteilnehmer 2 und der sendende Zweitbusteilnehmer 5 im Gutzustand, also nicht in einem Störungszustand, sind der erste Datenbus 4 und der zweite Datenbus 7 voneinander getrennt. Dieser Fall ist in Fig. 1 dargestellt. Die Schaltungseinheit 9 ist nun derart ausgestaltet, dass sie im Störungszustand des sendenden Erstbusteilnehmers 2 oder im Störungszustand des sendenden Zweitbusteilnehmers 5 den ersten Datenbus 4 und den zweiten Datenbus 7 über die Schaltvorrichtung 10 miteinander verbindet. Für den Fall, dass sich der sendende Zweitbusteilnehmer 5 im Störungszustand befindet, ist dann der sendende Erstbusteilnehmer 2 sowohl mit den empfangenden Erstbusteilnehmern 3 als auch mit den empfangenden Zweitbusteilnehmern 6 verbunden. Befindet sich hingegen der sendende Erstbusteilnehmer 2 im Störungszustand, ist durch das Verbinden der beiden Datenbusse 4, 7 der funktionsfähige sendende Zweitbusteilnehmer 5 sowohl mit den empfangenden Zweitbusteilnehmern 6 als auch mit den empfangenden Erstbusteilnehmern 3 verbunden.

Sowohl der funktionsfähige sendende Erstbusteilnehmer 2 als auch der funktionsfähige sendende Zweitbusteilnehmer 5 sind derart ausgestaltet, dass sie im Störungszustand des jeweils anderen Busteilnehmers 2, 5 Steuerbefehle sowohl an die empfangenden Erstbusteilnehmer 3 als auch an die empfangenden Zweitbusteilnehmer 6 aussenden. Die empfangenden Erstbusteilnehmer 3 und die empfangenden Zweitbusteilnehmer 6 sind derart ausgestaltet, dass sie die Steuerbefehle ausführen. Der sendende Erstbusteilnehmer 2 und der sendende Zweitbusteilnehmer 5 sind derart ausgestaltet, dass sie im Störungszustand des jeweils anderen sendenden Busteilnehmers 5, 2, ein Störungssignal an die Schaltungseinheit 9 aussenden.

Bei der in Fig. 1 dargestellten Ausgestaltung ist die Schaltungseinheit 9 mit dem Überwachungskommunikationskanal 8 verbunden. Die Schaltungseinheit 9 wird über den Überwachungskommunikationskanal 8, der vorliegend als analoger Kommunikationskanal ausgebildet ist, von den sendenden Busteilnehmern 2, 5 angesteuert. Im Gegensatz hierzu ist in Fig. 2 eine Ausgestaltung des Bussystems 1 dargestellt, bei der die Schaltungseinheit 9 sowohl mit dem sendenden Erstbusteilnehmer 2 als auch mit dem sendenden Zweitbusteilnehmer 5 direkt verbunden ist. Zudem ist der Störungszustand des sendenden Erstbusteilnehmers 2 dargestellt; die Schaltungseinheit 9 hat den ersten Datenbus 4 und den zweiten Datenbus 7 über die Schaltvorrichtung 10 miteinander verbunden. Das Aussenden der Steuerbefehle erfolgt nun nur noch von dem sendenden Zweitbusteilnehmer 5. Sowohl die empfangenden Erstbusteilnehmer 3 als auch die empfangenden Zweitbusteilnehmer 6 sind derart ausgestaltet, dass sie im Gutzustand der sendenden Busteilnehmer 2, 5 Zustandsdaten über ihren aktuellen Betriebszustand und die Prozessumgebung charakterisierende Daten an die sendenden Busteilnehmer 2, 5 aussenden. Im dargestellten Zustand des Bussystems 1, nämlich im Störungszustand des sendenden Erstbusteilnehmers 2 haben die empfangenden Busteilnehmer 3, 6 das Senden der Zustandsdaten und der die Prozessumgebung charakterisierenden Daten eingestellt. Die empfangenden Zweitbusteilnehmer 6 sind zum Einstellen des Sendens der entsprechenden Daten von dem sendenden Zweitbusteilnehmer 5 aufgefordert worden. Die empfangenden Erstbusteilnehmer 3 hingegen haben den Störungszustand des sendenden Erstbusteilnehmers 2 selbständig erkannt und das Senden der Zustandsdaten und der die Prozessumgebung charakterisierenden Daten eingestellt.

Durch das Einstellen des Sendens der entsprechenden Daten verringert sich die Auslastung der Datenbusse 4, 7, sodass die vollständige zur Verfügung stehende Bandbreite der Datenbusse 4, 7 zum Senden der Steuerbefehle ausgenutzt werden kann.

Das in Fig. 2 dargestellte Bussystem 1 unterscheidet sich zudem von dem in Fig. 1 dargestellten Bussystem 1 dadurch, dass der Überwachungskommunikationskanal 8 als digitaler Kommunikationskanal ausgestaltet ist. Weiter ist die Schaltungseinheit 9 derart ausgestaltet, dass sie einen Störungszustand des sendenden Erstbusteilnehmers 2 oder des sendenden Zweitbusteilnehmers 5 selbständig erkennt. Zudem ist die Schaltungseinheit 9 derart ausgestaltet, dass sie den ersten Datenbus 4 und den zweiten Datenbus 7 über die Schaltvorrichtung 10 dann verbindet, wenn der sendende Erstbusteilnehmer 2 oder der sendende Zweitbusteilnehmer 5 in einem Fehlerzustand befindlich sind, oder eine angefragte Reaktion einer der beiden sendenden Busteilnehmer 2, 5 ausbleibt, oder einer der beiden sendenden Busteilnehmer 2, 5 ausgeschaltet wird.

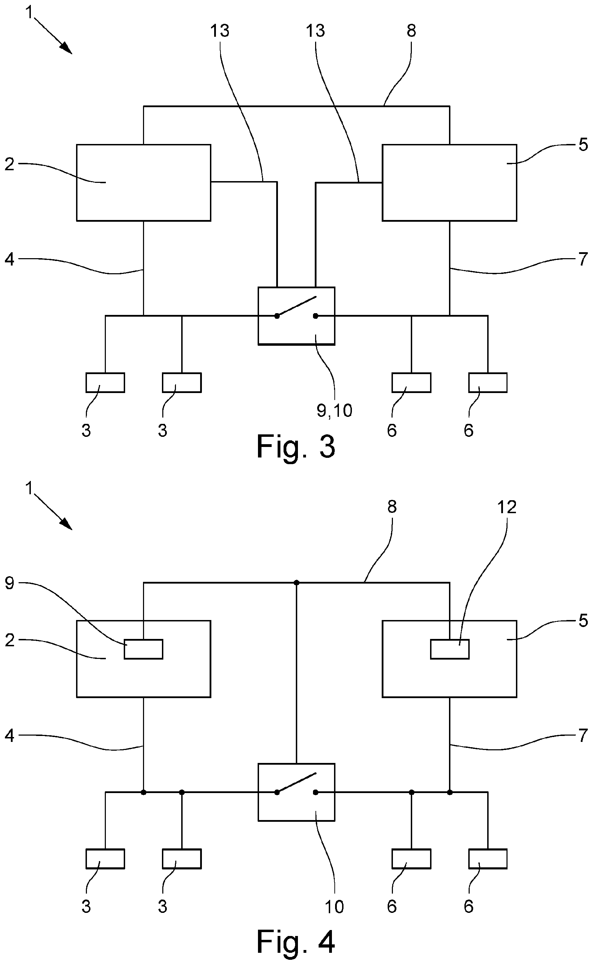

In Fig. 3 ist eine weitere Ausgestaltung eines Bussystems 1 dargestellt. Hier sind die Schaltungseinheit 9 und die Schaltvorrichtung 10 in einem Busteilnehmer vereint, die Schaltungseinheit 9 ist also nicht als separater Busteilnehmer 11, wie in den Fig. 1 und 2 realisiert. Der sendende Erstbusteilnehmer 2 und der sendende Zweitbusteilnehmer 5 sind über Schaltkanäle 13 mit der Schaltungseinheit 9 verbunden.

Fig. 4 zeigt eine weitere Variante eines Bussystems 1. Das hier dargestellte Bussystem 1 weist eine zweite Schaltungseinheit 12 auf. Die erste Schaltungseinheit 9 ist in dem sendenden Erstbusteilnehmer 2 implementiert, wohingegen die zweite Schaltungseinheit 12 in dem sendenden Zweitbusteilnehmer 5 implementiert ist. Die Schaltvorrichtung 10 hingegen ist mit dem Überwachungskommunikationskanal 8 verbunden, über den die erste Schaltungseinheit 9 und die zweite Schaltungseinheit 12 die Schaltvorrichtung 10 schalten können.

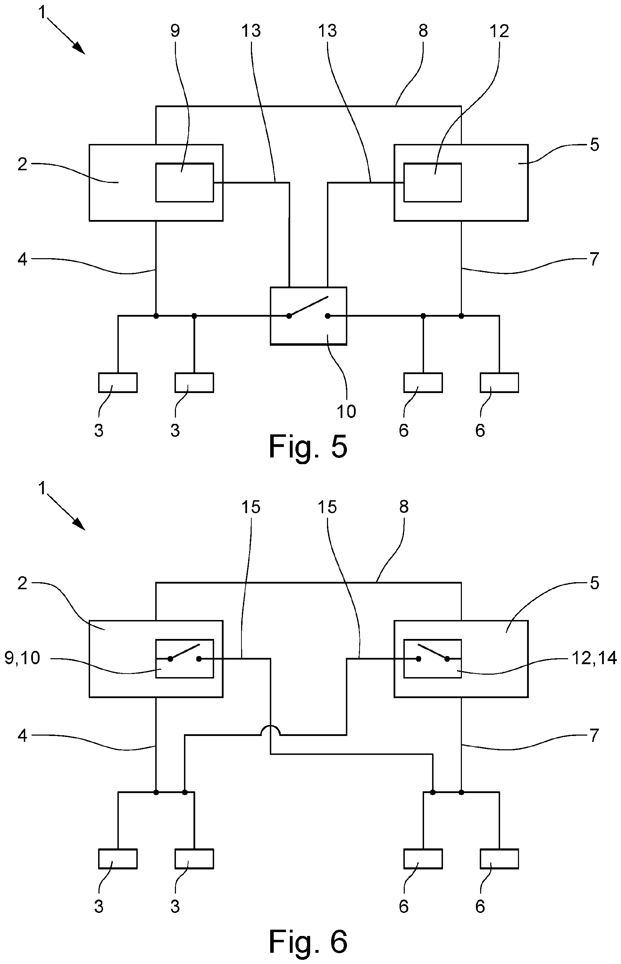

Eine alternative Variante des Bussystems 1 ist in Fig. 5 dargestellt. Auch hier ist eine erste Schaltungseinheit 9 in dem sendenden Erstbusteilnehmer 2 implementiert und ist eine zweite Schaltungseinheit 12 in dem sendenden Zweitbusteilnehmer 5 implementiert. Die beiden Schaltungseinheiten 9, 12 sind jedoch jeweils über einen Schaltkanal 13 mit der Schaltvorrichtung 10 verbunden und schalten die Schaltvorrichtung 10 entsprechend über die Schaltkanäle 13. Das dargestellte Bussystem 1 zeichnet sich zudem dadurch aus, dass der sendende Erstbusteilnehmer 2 und der sendende Zweitbusteilnehmer 5 derart ausgestaltet sind, dass sie bei der Initialisierung des Bussystems Daten zur Konfiguration und/oder zur Steuerung der empfangenden Busteilnehmer 3, 6 und/oder Charakterisierungsinformationen der empfangenden Busteilnehmer über den ersten Datenbus 4 und den zweiten Datenbus 7 austauschen. Die Initialisierung des Bussystems 1 erfolgt, bevor das Bussystem 1 in seinen Betriebszustand übergeht und die Prozessanlage steuert. Bei der Initialisierung des Bussystems, also beim Austauschen der Daten sind der erste Datenbus 4 und der zweite Datenbus 7 über die Schaltvorrichtung 10 miteinander verbunden. Die Schaltungseinheit ist so ausgestaltet, dass sie nach dem Austausch der Daten den ersten Datenbus 4 und den zweiten Datenbus 7 über die Schaltvorrichtung 10 trennt.

Zudem ist in der dargestellten Ausgestaltung der sendende Erstbusteilnehmer 2 derart ausgestaltet, dass er im Störzutand des sendenden Zweitbusteilnehmers 5 die empfangenden Zweitbusteilnehmer 6 in einen Folgemodus versetzt. Das bedeutet, dass die empfangenden Zweitbusteilnehmer 6 die an die empfangenden Erstbusteilnehmer 3 gerichteten Steuerbefehle ausführen und nicht separate Steuerbefehle erhalten.

In Fig. 6 ist ein weiteres Bussystem 1 dargestellt. Der sendende Erstbusteilnehmer 2 und der sendende Zweitbusteilnehmer 5 sind hier derart ausgestaltet, dass sie bei der Initialisierung des Bussystems und im laufenden Betrieb des Bussystems Daten zur Konfiguration und/oder zur Steuerung der empfangenden Busteilnehmer und Charakterisierungsinformationen der empfangenden Busteilnehmer über den Überwachungskommunikationskanal 8 austauschen. Im Unterschied zu dem in Fig. 5 dargestellten Bussystem ist somit ein Datenaustausch auch während des laufenden Betriebes möglich. Jedoch muss hier der Überwachungskommunikationskanal 8 derart ausgelegt sein, dass das Übersenden der gesamten Daten möglich ist. Es erfolgt also nicht mehr nur eine gegenseitige Funktionsüberwachung der beiden sendenden Busteilnehmer 2, 5 über den Überwachungskommunikationskanal.

Des Weiteren zeichnet sich das in Fig. 6 dargestellte Bussystem dadurch aus, dass neben einer zweiten Schaltungseinheit 12 auch eine zweite Schaltvorrichtung 14 vorgesehen ist. Die erste Schaltungseinheit 9 und die erste Schaltvorrichtung 10 sind im sendenden Erstbusteilnehmer 2 implementiert. Die zweite Schaltungseinheit 12 und die zweite Schaltvorrichtung 14 sind im sendenden Zweitbusteilnehmer 5 implementiert. Der sendende Erstbusteilnehmer 2 ist über die erste Schaltvorrichtung 10 mit dem zweiten Datenbus 7 verbindbar und von dem zweiten Datenbus 7 trennbar, wohingegen der sendende Zweitbusteilnehmer 5 über die zweite Schaltvorrichtung 14 mit dem ersten Datenbus 4 verbindbar und von dem ersten Datenbus 4 trennbar ist.

Durch die Verbindung des sendenden Erstbusteilnehmers 2 mit dem zweiten Datenbus 7 werden auch der erste Datenbus 4 und der zweite Datenbus 7 miteinander verbunden. Durch die Verbindung des sendenden Zweitbusteilnehmers 5 mit dem ersten Datenbus 4 werden auch der erste Datenbus 4 und der zweite Datenbus 7 miteinander verbunden.

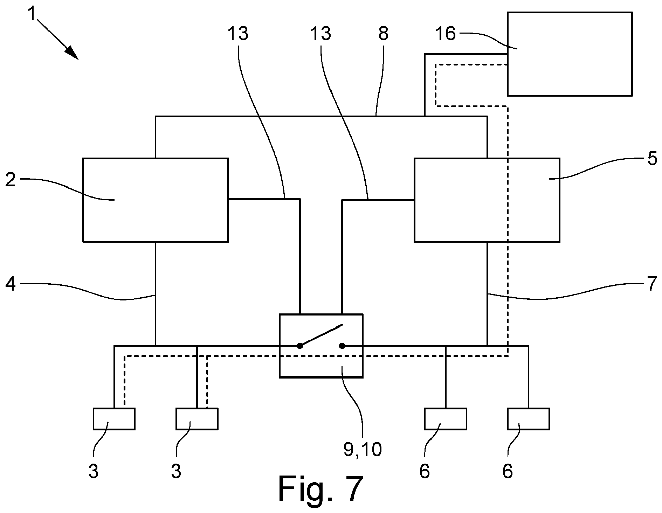

Fig. 7 zeigt eine andere Variante eines Bussystems 1. Das dargestellte Bussystem 1 weist neben dem sendenden Erstbusteilnehmer 2 und dem sendenden Zweitbusteilnehmer 5 einen sendenden Ersatzbusteilnehmer 16 auf. Der sendende Ersatzbusteilnehmer 16 ist über den Überwachungskommunikationskanal 8 mit dem sendenden Erstbusteilnehmer 2 und dem sendenden Zweitbusteilnehmer 5 verbunden. Dargestellt ist das Bussystem im Gutzustand der beiden sendenden Busteilnehmer 2, 5. In dem sendenden Ersatzbusteilnehmer sind die Daten zur Konfiguration und/oder zur Steuerung der empfangenden Busteilnehmer 3, 6 und/oder Charakterisierungsinformationen der empfangenden Busteilnehmer 5, 6 abgelegt. Der sendende Ersatzbusteilnehmer 16 ist derart ausgestaltet, dass er im Störungszustand des sendenden Erstbusteilnehmers 2 Steuerbefehle an den empfangenden Erstbusteilnehmer 3 aussendet oder im Störungszustand des sendenden Zweitbusteilnehmers 5 Steuerbefehle an den empfangenden Zweitbusteilnehmer 6 aussendet. Die empfangenden Busteilnehmer 3, 6 sind entsprechend so ausgestaltet, dass sie die Steuerbefehle des sendenden Ersatzbusteilnehmers 16 ausführen.

Gestrichelt dargestellt ist der Kommunikationsweg des sendenden Ersatzbusteilnehmers 16 für den Fall, dass sich der sendende Erstbusteilnehmer 2 im Störungszustand befindet. In diesem Fall wären dann der erste Datenbus 4 und der zweite Datenbus 7 über die Schaltvorrichtung 10 miteinander verbunden. Der sendende Ersatzbusteilnehmer 16 verwendet den sendenden Zweitbusteilnehmer 5 als Schnittstelle zu dem zweiten Datenbus 7 und sendet seine Steuerbefehle über den Überwachungskommunikationskanal 8, den sendenden Zweitbusteilnehmer 5, den zweiten Datenbus 7 und den ersten Datenbus 4 an die empfangenden Erstbusteilnehmer 3.

## Patentansprüche

1. Bussystem (1) für eine Prozessanlage, mit einem Busnachrichten sendenden Erstbusteilnehmer (2) und mit wenigstens einem Busnachrichten empfangenden Erstbusteilnehmer (3), wobei der sendende Erstbusteilnehmer (2) und der empfangende Erstbusteilnehmer (3) über einen ersten Datenbus (4) miteinander verbunden sind, wobei der sendende Erstbusteilnehmer (2) derart ausgestaltet ist, dass er Steuerbefehle an den empfangenden Erstbusteilnehmer (3) aussendet, wobei der empfangende Erstbusteilnehmer (3) derart ausgestaltet ist, dass er die Steuerbefehle des sendenden Erstbusteilnehmers (2) ausführt,
wobei das Bussystem weiterhin die Merkmale aufweist,
dass ein sendender Zweitbusteilnehmer (5) und wenigstens ein empfangender Zweitbusteilnehmer (6) vorhanden sind, dass der sendende Zweitbusteilnehmer (5) und der empfangende Zweitbusteilnehmer (6) über einen zweiten Datenbus (7) miteinander verbunden sind, dass der sendende Zweitbusteilnehmer (5) derart ausgestaltet ist, dass er Steuerbefehle an den empfangenden Zweitbusteilnehmer (6) aussendet, dass der empfangende Zweitbusteilnehmer (6) derart ausgestaltet ist, dass er die Steuerbefehle des sendenden Zweitbusteilnehmers (5) ausführt,
dass der sendende Erstbusteilnehmer (2) und der sendende Zweitbusteilnehmer (5) über einen Überwachungskommunikationskanal (8) miteinander verbunden sind und derart ausgestaltet sind, dass sie sich gegenseitig funktionsüberwachen,
dass der erste Datenbus (4) und der zweite Datenbus (7) über eine durch wenigstens eine Schaltungseinheit (9) steuerbare Schaltvorrichtung (10) miteinander verbindbar und voneinander trennbar sind, wobei im gleichzeitigen Gutzustand des sendenden Erstbusteilnehmers (2) und des sendenden Zweitbusteilnehmers (5) der erste Datenbus (4) und der zweite Datenbus (7) voneinander getrennt sind,
dass die Schaltungseinheit (9) derart ausgestaltet ist, dass sie im Störungszustand des sendenden Erstbusteilnehmers (2) oder im Störungszustand des sendenden Zweitbusteilnehmers (5) den ersten Datenbus (4) und den zweiten Datenbus (7) über die Schaltvorrichtung (10) miteinander verbindet, sodass der funktionsfähige sendende Erstbusteilnehmer (2) mit dem empfangenden Erstbusteilnehmer (3) und dem empfangenden Zweitbusteilnehmer (6) verbunden ist oder der funktionsfähige sendende Zweitbusteilnehmer (5) mit dem empfangenden Erstbusteilnehmer (3) und dem empfangenden Zweitbusteilnehmer (6) verbunden ist,
und dass der funktionsfähige sendende Erstbusteilnehmer (2) und der funktionsfähige sendende Zweitbusteilnehmer (5) derart ausgestaltet sind, dass sie im Störungszustand des jeweils anderen sendenden Busteilnehmers (5, 2) Steuerbefehle sowohl an den empfangenden Erstbusteilnehmer (3) als auch an den empfangenden Zweitbusteilnehmer (6) aussenden.

2. Bussystem (1) für eine Prozessanlage, mit einem Busnachrichten sendenden Erstbusteilnehmer (2) und mit wenigstens einem Busnachrichten empfangenden Erstbusteilnehmer (3), wobei der sendende Erstbusteilnehmer (2) und der empfangende Erstbusteilnehmer (3) über einen ersten Datenbus (4) miteinander verbunden sind, wobei der sendende Erstbusteilnehmer (2) derart ausgestaltet ist, dass er Steuerbefehle an den empfangenden Erstbusteilnehmer (3) aussendet, wobei der empfangende Erstbusteilnehmer (3) derart ausgestaltet ist, dass er die Steuerbefehle des sendenden Erstbusteilnehmers (2) ausführt,
wobei das Bussystem weiterhin die Merkmale aufweist,
dass ein sendender Zweitbusteilnehmer (5) und wenigstens ein empfangender Zweitbusteilnehmer (6) vorhanden sind, dass der sendende Zweitbusteilnehmer (5) und der empfangende Zweitbusteilnehmer (6) über einen zweiten Datenbus (7) miteinander verbunden sind, dass der sendende Zweitbusteilnehmer (5) derart ausgestaltet ist, dass er Steuerbefehle an den empfangenden Zweitbusteilnehmer (6) aussendet, dass der empfangende Zweitbusteilnehmer (6) derart ausgestaltet ist, dass er die Steuerbefehle des sendenden Zweitbusteilnehmers (5) ausführt,
dass der sendende Erstbusteilnehmer (2) und der sendende Zweitbusteilnehmer (5) über einen Überwachungskommunikationskanal (8) mit einem sendenden Ersatzbusteilnehmer (16) verbunden sind und dass der sendende Ersatzbusteilnehmer (16) derart ausgestaltet ist, dass er den sendenden Erstbusteilnehmer (2) und den sendenden Zweitbusteilnehmer (5) funktionsüberwacht,
dass der erste Datenbus (4) und der zweite Datenbus (7) über eine durch wenigstens eine Schaltungseinheit (9) steuerbare Schaltvorrichtung (10) miteinander verbindbar und voneinander trennbar sind, wobei im gleichzeitigen Gutzustand des sendenden Erstbusteilnehmers (2) und des sendenden Zweitbusteilnehmers (5) der erste Datenbus (4) und der zweite Datenbus (7) voneinander getrennt sind,
dass die Schaltungseinheit (9) derart ausgestaltet ist, dass sie im Störungszustand des sendenden Erstbusteilnehmers (2) oder im Störungszustand des sendenden Zweitbusteilnehmers (5) den ersten Datenbus (4) und den zweiten Datenbus (7) über die Schaltvorrichtung (10) miteinander verbindet, sodass der sendende Ersatzbusteilnehmer (16) über den Überwachungskommunikationskanal (8), den funktionsfähigen sendenden Erstbusteilnehmer (2, 5), den ersten Datenbus (4) und den zweiten Datenbus (7) mit dem empfangenden Busteilnehmer (3, 6) des im Störungszustand befindlichen sendenden Busteilnehmers (2, 5) verbunden ist,
und dass der sendende Ersatzbusteilnehmer (16) derart ausgestaltet ist, dass er im Störungszustand des sendenden Erstbusteilnehmers (2) Steuerbefehle an den empfangenden Erstbusteilnehmer (3) aussendet oder im Störungszustand des sendenden Zweitbusteilnehmers (5) Steuerbefehle an den empfangenden Zweitbusteilnehmer (6) aussendet.

3. Bussystem (1) nach Anspruch 1 oder 2, **dadurch gekennzeichnet, dass** der empfangende Erstbusteilnehmer (3) Zustandsdaten über seinen aktuellen Betriebszustand oder die Prozessumgebung charakterisierende Daten an den sendenden Erstbusteilnehmer (2) sendet und der empfangende Zweitbusteilnehmer (6) Zustandsdaten über seinen aktuellen Betriebszustand oder die Prozessumgebung charakterisierende Daten an den sendenden Zweitbusteilnehmer (5) sendet und dass der empfangende Erstbusteilnehmer (3) und der empfangende Zweitbusteilnehmer (6) derart ausgestaltet sind, dass sie im Störungszustand des sendenden Erstbusteilnehmers (2) oder des sendenden Zweitbusteilnehmers (5) das Senden der Zustandsdaten oder der die Prozessumgebung charakterisierenden Daten zumindest teilweise einstellen.

4. Bussystem (1) nach Anspruch 3, **dadurch gekennzeichnet, dass** der sendende Erstbusteilnehmer (2), der sendende Zweitbusteilnehmer (5) und der sendende Ersatzbusteilnehmer (16) - soweit vorhanden - derart ausgestaltet sind, dass sie im Störungszustand des sendenden Erstbusteilnehmers (2) oder des sendenden Zweitbusteilnehmers (5) den empfangenden Erstbusteilnehmer (3) und den empfangenden Zweitbusteilnehmer (6) zum zumindest teilweisen Einstellen des Sendens der Zustandsdaten und/oder die Prozessumgebung charakterisierenden Daten auffordern oder dass der empfangende Erstbusteilnehmer (3) und der empfangende Zweitbusteilnehmer (6) derart ausgestaltet sind, dass sie den Störungszustand des sendenden Erstbusteilnehmers (2) oder des sendenden Zweitbusteilnehmers (5) erkennen und selbständig das Senden der Zustandsdaten oder der die Prozessumgebung charakterisierenden Daten zumindest teilweise einstellen.

5. Bussystem (1) nach einem der Ansprüche 1 bis 4, **dadurch gekennzeichnet, dass** der Überwachungskommunikationskanal (8) als analoger, digitaler, drahtloser oder drahtgebundener Kommunikationskanal realisiert ist.

6. Bussystem (1) nach einem der Ansprüche 1 bis 5, **dadurch gekennzeichnet, dass** die Schaltungseinheit (9) als separater Busteilnehmer (11) realisiert ist.

7. Bussystem (1) nach einem der Ansprüche 1 bis 6, **dadurch gekennzeichnet, dass** ein moderierender Erstbusteilnehmer und ein moderierender Zweitbusteilnehmer vorgesehen sind, dass der moderierende Erstbusteilnehmer die Kommunikation zwischen dem sendenden Erstbusteilnehmer (2) und dem empfangenden Erstbusteilnehmer (3) moderiert und der moderierende Zweitbusteilnehmer die Kommunikation zwischen dem sendenden Zweitbusteilnehmer (5) und dem empfangenden Zweitbusteilnehmer (6) moderiert
und dass im Störungszustand des sendenden Erstbusteilnehmers (2) der moderierende Erstbusteilnehmer deaktiviert wird und der moderierende Zweitbusteilnehmer die Kommunikation zwischen dem sendenden Zweitbusteilnehmer (5) und dem empfangenden Erstbusteilnehmer (3) moderiert oder im Störungszustand des sendenden Zweitbusteilnehmers (5) der moderierende Zweitbusteilnehmer deaktiviert wird und der moderierende Erstbusteilnehmer die Kommunikation zwischen dem sendenden Erstbusteilnehmer (2) und dem empfangenden Zweitbusteilnehmer (6) moderiert.

8. Bussystem (1) nach Anspruch 7, **dadurch gekennzeichnet, dass** der moderierende Erstbusteilnehmer und der moderierende Zweitbusteilnehmer als separate Busteilnehmer realisiert sind,
oder dass der moderierende Erstbusteilnehmer und der moderierende Zweitbusteilnehmer in der Schaltungseinheit (9) vorgesehen sind,
oder dass der moderierende Erstbusteilnehmer in dem sendenden Erstbusteilnehmer (2) implementiert ist und moderierende Zweitbusteilnehmer in dem sendenden Zweitbusteilnehmer (5) implementiert ist.

9. Bussystem (1) nach einem der Ansprüche 1 bis 8, **dadurch gekennzeichnet, dass** eine zweite Schaltungseinheit (12) vorgesehen ist, dass die erste Schaltungseinheit (9) im sendenden Erstbusteilnehmer (2) implementiert ist und dass die zweite Schaltungseinheit (12) im sendenden Zweitbusteilnehmer (5) implementiert ist und dass ferner eine der folgenden drei Varianten realisiert ist:
• die erste Schaltungseinheit (9) und die zweite Schaltungseinheit (12) sind über jeweils einen Schaltkanal (13) mit der Schaltvorrichtung (10) verbunden und schalten die Schaltvorrichtung (10) über den jeweiligen Schaltkanal (13),
• die Schaltvorrichtung (10) ist mit dem Überwachungskommunikationskanal (8) verbunden und die erste Schaltungseinheit (9) und die zweite Schaltungseinheit (12) schalten die Schaltvorrichtung (10) über den Überwachungskommunikationskanal (8),
• die erste Schaltungseinheit (9) schaltet die Schaltvorrichtung (10) über den ersten Datenbus (4) und die zweite Schaltungseinheit (9) schaltet die Schaltvorrichtung (10) über den zweiten Datenbus (7).

10. Bussystem (1) nach einem der Ansprüche 1 bis 9, **dadurch gekennzeichnet, dass** die Schaltungseinheit (9) - oder die Schaltungseinheiten (9, 12) - derart ausgestaltet ist - oder sind -, dass sie einen Störungszustand des sendenden Erstbusteilnehmers (2) oder des sendenden Zweitbusteilnehmers (5) selbständig erkennt - oder erkennen -, oder dass der sendende Erstbusteilnehmer (2) und der sendende Zweitbusteilnehmer (5) derart ausgestaltet sind, dass sie im Störungszustandes eines der sendenden Busteilnehmer (5, 2) ein Störungssignal an die Schaltungseinheit (9) - oder die Schaltungseinheiten (9, 12) - senden.

11. Bussystem (1) nach einem der Ansprüche 1 bis 10 ohne 6, **dadurch gekennzeichnet, dass** eine zweite Schaltungseinheit (12) und eine zweite Schaltvorrichtung (14) vorgesehen sind, dass die erste Schaltungseinheit (9) und die erste Schaltvorrichtung (10) im sendenden Erstbusteilnehmer (2) implementiert sind und die zweite Schaltungseinheit (12) und die zweite Schaltvorrichtung (14) im sendenden Zweitbusteilnehmer (5) implementiert sind, und dass der sendende Erstbusteilnehmer (2) über die erste Schaltvorrichtung (10) mit dem zweiten Datenbus (7) verbindbar und von dem zweiten Datenbus (7) trennbar ist und dass der sendende Zweitbusteilnehmer (5) über die zweite Schaltvorrichtung (14) mit dem ersten Datenbus (4) verbindbar und von dem ersten Datenbus (4) trennbar ist.

12. Bussystem (1) nach einem der Ansprüche 1 bis 11 ohne 2, **dadurch gekennzeichnet, dass** der sendende Erstbusteilnehmer (2) und der sendende Zweitbusteilnehmer (5) derart ausgestaltet sind, dass sie bei der Initialisierung des Bussystems (1) Daten zur Konfiguration und/oder zur Steuerung der empfangenden Busteilnehmer (3, 6) und/oder Charakterisierungsinformationen der empfangenden Busteilnehmer (3, 6) über den ersten Datenbus (4) und den zweiten Datenbus (7) austauschen, wobei beim Initialisieren des Bussystems (1) der erste Datenbus (4) und der zweite Datenbus (7) über die Schaltvorrichtung (10) miteinander verbunden sind, und dass die Schaltungseinheit (9) derart ausgestaltet ist, dass sie nach dem Austausch der Daten den ersten Datenbus (4) und den zweiten Datenbus (7) über die Schaltvorrichtung (10) trennt,
oder dass der sendende Erstbusteilnehmer (2) und der sendende Zweitbusteilnehmer (5) derart ausgestaltet sind, dass sie bei der Initialisierung des Bussystems (1) und/oder im laufenden Betrieb des Bussystems (10) Daten zur Konfiguration und/oder zur Steuerung der empfangenden Busteilnehmer (3, 6) und/oder Charakterisierungsinformationen der empfangenden Busteilnehmer (3, 6) über den Überwachungskommunikationskanal (8) austauschen.

13. Bussystem nach einem der Ansprüche 2 bis 11, **dadurch gekennzeichnet, dass** der sendende Erstbusteilnehmer (2) und der sendende Zweitbusteilnehmer (5) derart ausgestaltet sind, dass sie bei der Initialisierung des Bussystems (1) und/oder im laufenden Betrieb des Bussystems (10) Daten zur Konfiguration und/oder zur Steuerung der empfangenden Busteilnehmer (3, 6) und/oder Charakterisierungsinformationen der empfangenden Busteilnehmer (3, 6) über den Überwachungskommunikationskanal (8) an den sendenden Ersatzbusteilnehmer (16) senden.

14. Bussystem (1) nach einem der Ansprüche 1 bis 13, **dadurch gekennzeichnet, dass** der sendende Erstbusteilnehmer (1) derart ausgestaltet ist, dass er im Störungszustand des sendenden Zweitbusteilnehmers (5) den empfangenden Zweitbusteilnehmer (6) in einen Folgemodus versetzt, derart, dass der empfangende Zweitbusteilnehmer (6) die an den empfangenden Erstbusteilnehmer (3) gerichteten Steuerbefehle ausführt, oder dass der sendende Zweitbusteilnehmer (5) derart ausgestaltet ist, dass er im Störungszustand des sendenden Erstbusteilnehmers (2) den empfangenden Erstbusteilnehmer (3) in einen Folgemodus versetzt, derart, dass der empfangende Erstbusteilnehmer (3) die an den empfangenden Zweitbusteilnehmer (6) gerichteten Steuerbefehle ausführt.

15. Bussystem (1) nach einem der Ansprüche 1 bis 14, **dadurch gekennzeichnet, dass** die Schaltungseinheit (9) derart ausgestaltet ist, dass sie den ersten Datenbus (4) und den zweiten Datenbus (7) über die Schaltvorrichtung (10) dann verbindet, wenn der sendende Erstbusteilnehmer (2) oder der sendende Zweitbusteilnehmer (5) in einem Fehlerzustand befindlich sind, oder eine angefragte Reaktion einer der beiden sendenden Busteilnehmer (2, 5) ausbleibt, oder einer der beiden sendenden Busteilnehmer (2, 5) ausgeschaltet wird.

## Claims

1. Bus system (1) for a process system, having a first bus subscriber (2) which transmits bus messages and having at least one first bus subscriber (3) which receives bus messages, wherein the transmitting first bus subscriber (2) and the receiving first bus subscriber (3) are connected to one another via a first data bus (4), wherein the transmitting first bus subscriber (2) is designed such that it transmits control commands to the receiving first bus subscriber (3), wherein the receiving first bus subscriber (3) is designed such that it executes the control commands of the transmitting first bus subscriber (2),
wherein the bus system also has the features
that a transmitting second bus subscriber (5) and at least one receiving second bus subscriber (6) are provided, that the transmitting second bus subscriber (5) and the receiving second bus subscriber (6) are connected to one another via a second data bus (7), that the transmitting second bus subscriber (5) is designed such that it transmits control commands to the receiving second bus subscriber (6), that the receiving second bus subscriber (6) is designed such that it executes the control commands of the transmitting second bus subscriber (5),
that the transmitting first bus subscriber (2) and the transmitting second bus subscriber (5) are connected to one another via a monitoring communication channel (8) and are designed such that they functionally monitor one another,
that the first data bus (4) and the second data bus (7) can be connected to one another and disconnected from one another via a switching device (10) which can be controlled by at least one circuit unit (9), wherein the first data bus (4) and the second data bus (7) are disconnected from one another in the simultaneous go state of the transmitting first bus subscriber (2) and of the transmitting second bus subscriber (5),
that the circuit unit (9) is designed such that, in the fault state of the transmitting first bus subscriber (2) or in the fault state of the transmitting second bus subscriber (5), it connects the first data bus (4) and the second data bus (7) to each other via the switching device (10) so that the functional transmitting first bus subscriber (2) is connected to the receiving first bus subscriber (3) and the receiving second bus subscriber (6), or the functional transmitting second bus subscriber (5) is connected to the receiving first bus subscriber (3) and the receiving second bus subscriber (6),
and that the functional transmitting first bus subscriber (2) and the functional transmitting second bus subscriber (5) are designed such that, in the fault state of the respective other transmitting bus subscriber (5, 2), they transmit control commands both to the receiving first bus subscriber (3) and to the receiving second bus subscriber (6).

2. Bus system (1) for a process system, having a first bus subscriber (2) which transmits bus messages and having at least one first bus subscriber (3) which receives bus messages, wherein the transmitting first bus subscriber (2) and the receiving first bus subscriber (3) are connected to one another via a first data bus (4), wherein the transmitting first bus subscriber (2) is designed such that it transmits control commands to the receiving first bus subscriber (3), wherein the receiving first bus subscriber (3) is designed such that it executes the control commands of the transmitting first bus subscriber (2),
wherein the bus system also has the features
that a transmitting second bus subscriber (5) and at least one receiving second bus subscriber (6) are provided, that the transmitting second bus subscriber (5) and the receiving second bus subscriber (6) are connected to one another via a second data bus (7), that the transmitting second bus subscriber (5) is designed such that it transmits control commands to the receiving second bus subscriber (6), that the receiving second bus subscriber (6) is designed such that it executes the control commands of the transmitting second bus subscriber (5),
that the transmitting first bus subscriber (2) and the transmitting second bus subscriber (5) are connected to a transmitting substitute bus subscriber (16) via a monitoring communication channel (8), and that the transmitting substitute bus subscriber (16) is designed such that it functionally monitors the transmitting first bus subscriber (2) and the transmitting second bus subscriber (5),
that the first data bus (4) and the second data bus (7) can be connected to one another and disconnected from one another via a switching device (10) which can be controlled by at least one circuit unit (9), wherein the first data bus (4) and the second data bus (7) are disconnected from one another in the simultaneous go state of the transmitting first bus subscriber (2) and of the transmitting second bus subscriber (5),
that the circuit unit (9) is designed such that, in the fault state of the transmitting first bus subscriber (2) or in the fault state of the transmitting second bus subscriber (5), it connects the first data bus (4) and the second data bus (7) to one another via the switching device (10) so that, in the fault state, the transmitting substitute bus subscriber (16) is connected to the receiving bus subscriber (3, 6) of the transmitting bus subscriber (2, 5) via the monitoring communication channel (8), the functional transmitting first bus subscriber (2, 5), the first data bus (4), and the second data bus (7),
and that the transmitting substitute bus subscriber (16) is designed such that, in the fault state of the transmitting first bus subscriber (2), it transmits control commands to the receiving first bus subscriber (3) or, in the fault state of the transmitting second bus subscriber (5), it transmits control commands to the receiving second bus subscriber (6).

3. Bus system (1) according to claim 1 or 2, **characterized in that** the receiving first bus subscriber (3) transmits status data about its current operating status or data characterizing the process environment to the transmitting first bus subscriber (2), and the receiving second bus subscriber (6) transmits status data about its current operating status or data characterizing the process environment to the transmitting second bus subscriber (5), and that the receiving first bus subscriber (3) and the receiving second bus subscriber (6) are designed such that they at least partially stop transmitting the status data or the data characterizing the process environment in the fault state of the transmitting first bus subscriber (2) or of the transmitting second bus subscriber (5).

4. Bus system (1) according to claim 3, **characterized in that** the transmitting first bus subscriber (2), the transmitting second bus subscriber (5) and the transmitting substitute bus subscriber (16) - if present - are designed such that, in the fault state of the transmitting first bus subscriber (2) or of the transmitting second bus subscriber (5), they prompt the receiving first bus subscriber (3) and the receiving second bus subscriber (6) to at least partially stop transmitting the status data and/or data characterizing the process environment, or that the receiving first bus subscriber (3) and the receiving second bus subscriber (6) are designed such that they recognize the fault state of the transmitting first bus subscriber (2) or the transmitting second bus subscriber (5) and independently at least partially stop the transmission of the status data or the data characterizing the process environment.

5. Bus system (1) according to any one of claims 1 to 4, **characterized in that** the monitoring communication channel (8) is implemented as an analog, digital, wireless or wired communication channel.

6. Bus system (1) according to any one of claims 1 to 5, **characterized in that** the circuit unit (9) is implemented as a separate bus subscriber (11).

7. Bus system (1) according to any one of claims 1 to 6, **characterized in that** a moderating first bus subscriber and a moderating second bus subscriber are provided, that the moderating first bus subscriber moderates the communication between the transmitting first bus subscriber (2) and the receiving first bus subscriber (3) and the moderating second bus subscriber moderates the communication between the transmitting second bus subscriber (5) and the receiving second bus subscriber (6)
and that, in the fault state of the transmitting first bus subscriber (2), the moderating first bus subscriber is deactivated and the moderating second bus subscriber moderates the communication between the transmitting second bus subscriber (5) and the receiving first bus subscriber (3) or, in the fault state of the transmitting second bus subscriber (5), the moderating second bus subscriber is deactivated and the moderating first bus subscriber moderates the communication between the transmitting first bus subscriber (2) and the receiving second bus subscriber (6).

8. Bus system (1) according to claim 7, **characterized in that** the moderating first bus subscriber and the moderating second bus subscriber are implemented as separate bus subscribers,
or that the moderating first bus subscriber and the moderating second bus subscriber are provided in the circuit unit (9),
or that the moderating first bus subscriber is implemented in the transmitting first bus subscriber (2) and moderating second bus subscriber is implemented in the transmitting second bus subscriber (5).

9. Bus system (1) according to any one of claims 1 to 8, **characterized in that** a second circuit unit (12) is provided, that the first circuit unit (9) is implemented in the transmitting first bus subscriber (2), and that the second circuit unit (12) is implemented in the transmitting second bus subscriber (5), and that, furthermore, one of the following three variations is implemented:
- the first switching unit (9) and the second switching unit (12) are each connected to the switching device (10) via a switching channel (13) and switch the switching device (10) via the respective switching channel (13),
- the switching device (10) is connected to the monitoring communication channel (8), and the first circuit unit (9) and the second circuit unit (12) switch the switching device (10) via the monitoring communication channel (8),
- the first circuit unit (9) switches the switching device (10) via the first data bus (4), and the second circuit unit (9) switches the switching device (10) via the second data bus (7).

10. Bus system (1) according to any one of claims 1 to 9, **characterized in that** the switching unit (9) - or the switching units (9, 12) -is - or are - designed such that it/they independently detects - or detect - a fault state of the transmitting first bus subscriber (2) or of the transmitting second bus subscriber (5), or that the transmitting first bus subscriber (2) and the transmitting second bus subscriber (5) are designed such that they transmit a fault signal to the circuit unit (9) - or the circuit units (9, 12) - in the fault state of one of the transmitting bus subscribers (5, 2).

11. Bus system (1) according to any one of claims 1 to 10 without 6, **characterized in that** a second circuit unit (12) and a second switching device (14) are provided, that the first circuit unit (9) and the first switching device (10) are implemented in the transmitting first bus subscriber (2) and the second circuit unit (12) and the second switching device (14) are implemented in the transmitting second bus subscriber (5), and that the transmitting first bus subscriber (2) can be connected to the second data bus (7) via the first switching device (10) and can be disconnected from the second data bus (7), and that the transmitting second bus subscriber (5) can be connected to the first data bus (4) via the second switching device (14) and can be disconnected from the first data bus (4).

12. Bus system (1) according to any one of claims 1 to 11 without 2, **characterized in that** the transmitting first bus subscriber (2) and the transmitting second bus subscriber (5) are designed such that, during initialization of the bus system (1), they transmit data for configuring and/or for controlling the receiving bus subscribers (3, 6) and/or characterization information of the receiving bus subscribers (3, 6) via the first data bus (4) and the second data bus (7), wherein the first data bus (4) and the second data bus (7) are connected to one another via the switching device (10) when the bus system (1) is initialized, and that the circuit unit (9) is designed such that it disconnects the first data bus (4) and the second data bus (7) via the switching device (10) after the data has been exchanged,
or that the transmitting first bus subscriber (2) and the transmitting second bus subscriber (5) are designed such that they exchange data for configuring and/or for controlling the receiving bus subscribers (3, 6) and/or characterization information of the receiving bus subscribers (3, 6) via the monitoring communication channel (8) during initialization of the bus system (1) and/or during operation of the bus system (10).

13. Bus system according to one of claims 2 to 11, **characterized in that** the transmitting first bus subscriber (2) and the transmitting second bus subscriber (5) are designed such that they transmit data for configuring and/or for controlling the receiving bus subscribers (3, 6) and/or characterization information of the receiving bus subscribers (3, 6) to the transmitting substitute bus subscriber (16) via the monitoring communication channel (8) during initialization of the bus system (1) and/or during ongoing operation of the bus system (10).

14. Bus system (1) according to any one of claims 1 to 13, **characterized in that** the transmitting first bus subscriber (1) is designed such that, in the fault state of the transmitting second bus subscriber (5), it places the receiving second bus subscriber (6) in a follow-up mode such that the receiving second bus subscriber (6) executes the control commands directed to the receiving first bus subscriber (3), or that the transmitting second bus subscriber (5) is designed such that, in the fault state of the transmitting first bus subscriber (2), it puts the receiving first bus subscriber (3) into a slave mode such that the receiving first bus subscriber (3) executes the control commands directed to the receiving second bus subscriber (6).

15. Bus system (1) according to any one of claims 1 to 14, **characterized in that** the circuit unit (9) is designed such that it connects the first data bus (4) and the second data bus (7) via the switching device (10) when the transmitting first bus subscriber (2) or the transmitting second bus subscriber (5) are in a fault state, or a requested response of one of the two transmitting bus subscribers (2, 5) fails to occur, or one of the two transmitting bus subscribers (2, 5) is switched off.

## Revendications

1. Système de bus (1) pour une installation de traitement, comprenant un souscripteur de bus primaire (2) émettant des messages de bus et comprenant au moins un souscripteur de bus primaire (3) recevant des messages de bus, le souscripteur de bus primaire émetteur (2) et le souscripteur de bus primaire récepteur (3) étant reliés entre eux par l'intermédiaire d'un premier bus de données (4), le souscripteur de bus primaire émetteur (2) étant conçu de telle sorte qu'il envoie des instructions de commande au souscripteur de bus primaire récepteur (3), le souscripteur de bus primaire récepteur (3) étant conçu de telle sorte qu'il exécute les instructions de commande du souscripteur de bus primaire émetteur (2),
dans lequel le système de bus présente en outre les caractéristiques qui consistent
en ce qu'un souscripteur de bus secondaire émetteur (5) et au moins un souscripteur de bus secondaire récepteur (6) sont présents, en ce que le souscripteur de bus secondaire émetteur (5) et le souscripteur de bus secondaire récepteur (6) sont reliés entre eux par l'intermédiaire d'un second bus de données (7), en ce que le souscripteur de bus secondaire émetteur (5) est conçu de telle sorte qu'il envoie des instructions de commande au souscripteur de bus secondaire récepteur (6), en ce que le souscripteur de bus secondaire récepteur (6) est conçu de telle sorte qu'il exécute les instructions de commande du souscripteur de bus secondaire émetteur (5), en ce que le souscripteur de bus primaire émetteur (2) et le souscripteur de bus secondaire émetteur (5) sont reliés entre eux par l'intermédiaire d'un canal de communication de surveillance (8) et sont conçus de telle sorte qu'ils se surveillent mutuellement en ce qui concerne leur fonctionnement,
en ce que le premier bus de données (4) et le second bus de données (7) peuvent être reliés entre eux et séparés l'un de l'autre par l'intermédiaire d'un dispositif de commutation (10) pouvant être commandé par au moins une unité de commutation (9), le premier bus de données (4) et le second bus de données (7) étant séparés l'un de l'autre dans l'état de service simultané du souscripteur de bus primaire émetteur (2) et du souscripteur de bus secondaire émetteur (5),
en ce que l'unité de commutation (9) est conçue de telle sorte qu'elle relie entre eux le premier bus de données (4) et le second bus de données (7) par l'intermédiaire du dispositif de commutation (10) dans l'état de panne du souscripteur de bus primaire émetteur (2) ou dans l'état de panne du souscripteur de bus secondaire émetteur (5), de telle sorte que le souscripteur de bus primaire émetteur (2) fonctionnel est relié au souscripteur de bus primaire récepteur (3) et au souscripteur de bus secondaire récepteur (6) ou que le souscripteur de bus secondaire émetteur (5) fonctionnel est relié au souscripteur de bus primaire récepteur (3) et au souscripteur de bus secondaire récepteur (6),
et en ce que le souscripteur de bus primaire émetteur (2) fonctionnel et le souscripteur de bus secondaire émetteur (5) fonctionnel sont conçus de telle sorte que, dans l'état de panne de l'autre souscripteur de bus émetteur (5, 2) respectif, ils émettent des instructions de commande aussi bien vers le souscripteur de bus primaire récepteur (3) que vers le souscripteur de bus secondaire récepteur (6).

2. Système de bus (1) pour une installation de traitement, comprenant un souscripteur de bus primaire (2) émettant des messages de bus et comprenant au moins un souscripteur de bus primaire (3) recevant des messages de bus, le souscripteur de bus primaire émetteur (2) et le souscripteur de bus primaire récepteur (3) étant reliés entre eux par l'intermédiaire d'un premier bus de données (4), le souscripteur de bus primaire émetteur (2) étant conçu de telle sorte qu'il envoie des instructions de commande au souscripteur de bus primaire récepteur (3), le souscripteur de bus primaire récepteur (3) étant conçu de telle sorte qu'il exécute les instructions de commande du souscripteur de bus primaire émetteur (2),
dans lequel le système de bus présente en outre les caractéristiques qui consistent
en ce qu'un souscripteur de bus secondaire émetteur (5) et au moins un souscripteur de bus secondaire récepteur (6) sont présents, en ce que le souscripteur de bus secondaire émetteur (5) et le souscripteur de bus secondaire récepteur (6) sont reliés entre eux par l'intermédiaire d'un second bus de données (7), en ce que le souscripteur de bus secondaire émetteur (5) est conçu de telle sorte qu'il envoie des instructions de commande au souscripteur de bus secondaire récepteur (6), en ce que le souscripteur de bus secondaire récepteur (6) est conçu de telle sorte qu'il exécute les instructions de commande du souscripteur de bus secondaire émetteur (5), en ce que le souscripteur de bus primaire émetteur (2) et le souscripteur de bus secondaire émetteur (5) sont reliés par l'intermédiaire d'un canal de communication de surveillance (8) à un souscripteur de bus émetteur (16) de remplacement et en ce que le souscripteur de bus émetteur (16) de remplacement est conçu de telle sorte qu'il surveille le fonctionnement du souscripteur de bus primaire émetteur (2) et du souscripteur de bus secondaire émetteur (5),
en ce que le premier bus de données (4) et le second bus de données (7) peuvent être reliés entre eux et séparés l'un de l'autre par l'intermédiaire d'un dispositif de commutation (10) pouvant être commandé par au moins une unité de commutation (9), le premier bus de données (4) et le second bus de données (7) étant séparés l'un de l'autre dans l'état de service simultané du souscripteur de bus primaire émetteur (2) et du souscripteur de bus secondaire émetteur (5),
en ce que l'unité de commutation (9) est conçue de telle sorte que, dans l'état de panne du souscripteur de bus primaire émetteur (2) ou dans l'état de panne du souscripteur de bus secondaire émetteur (5), elle relie entre eux le premier bus de données (4) et le second bus de données (7) par l'intermédiaire du dispositif de commutation (10), de telle sorte que le souscripteur de bus émetteur (16) de remplacement est relié au souscripteur de bus (3, 6) récepteur du souscripteur de bus (2, 5) émetteur se trouvant dans l'état de panne par l'intermédiaire du canal de communication de surveillance (8), du souscripteur de bus primaire (2, 5) émetteur fonctionnel, du premier bus de données (4) et du second bus de données (7),
et en que le souscripteur de bus émetteur (16) de remplacement est conçu de telle sorte que, dans l'état de panne du souscripteur de bus primaire émetteur (2), il envoie des instructions de commande au souscripteur de bus primaire récepteur (3) ou que, dans l'état de panne du souscripteur de bus secondaire émetteur (5), il envoie des instructions de commande au souscripteur de bus secondaire récepteur (6).

3. Système de bus (1) selon la revendication 1 ou 2, **caractérisé en ce que** le souscripteur de bus primaire récepteur (3) envoie des données d'état concernant son état de fonctionnement actuel ou des données caractérisant l'environnement de traitement au souscripteur de bus primaire émetteur (2) et **en ce que** le souscripteur de bus secondaire récepteur (6) envoie des données d'état concernant son état de fonctionnement actuel ou des données caractérisant l'environnement de traitement au souscripteur de bus secondaire émetteur (5) et **en ce que** le souscripteur de bus primaire récepteur (3) et le souscripteur de bus secondaire récepteur (6) sont conçus de telle sorte que, dans l'état de panne du souscripteur de bus primaire émetteur (2) ou du souscripteur de bus secondaire émetteur (5), ils arrêtent au moins partiellement l'émission des données d'état ou des données caractérisant l'environnement de traitement.

4. Système de bus (1) selon la revendication 3, **caractérisé en ce que** le souscripteur de bus primaire émetteur (2), le souscripteur de bus secondaire émetteur (5) et le souscripteur de bus émetteur (16) de remplacement - s'il est présent - sont conçus de telle sorte que, dans l'état de panne du souscripteur de bus primaire émetteur (2) ou du souscripteur de bus secondaire émetteur (5), ils demandent au souscripteur de bus primaire récepteur (3) et au souscripteur de bus secondaire récepteur (6) d'arrêter au moins partiellement l'émission des données d'état et/ou des données caractérisant l'environnement de traitement, ou **en ce que** le souscripteur de bus primaire récepteur (3) et le souscripteur de bus secondaire récepteur (6) sont conçus de telle sorte qu'ils détectent l'état de panne du souscripteur de bus primaire émetteur (2) ou du souscripteur de bus secondaire émetteur (5) et arrêtent de manière autonome au moins partiellement l'émission des données d'état ou des données caractérisant l'environnement de traitement.

5. Système de bus (1) selon l'une des revendications 1 à 4, **caractérisé en ce que** le canal de communication de surveillance (8) est réalisé sous la forme d'un canal de communication analogique, numérique, sans fil ou filaire.

6. Système de bus (1) selon l'une des revendications 1 à 5, **caractérisé en ce que** l'unité de commutation (9) est réalisée sous la forme d'un souscripteur de bus (11) séparé.

7. Système de bus (1) selon l'une des revendications 1 à 6, **caractérisé en ce qu'**il est prévu un souscripteur de bus primaire modérateur et un souscripteur de bus secondaire modérateur, **en ce que** le souscripteur de bus primaire modérateur modère la communication entre le souscripteur de bus primaire émetteur (2) et le souscripteur de bus primaire récepteur (3) et **en ce que** le souscripteur de bus secondaire modérateur modère la communication entre le souscripteur de bus secondaire émetteur (5) et le souscripteur de bus secondaire récepteur (6)
et **en ce que**, dans l'état de panne du souscripteur de bus primaire émetteur (2), le souscripteur de bus primaire modérateur est désactivé et le souscripteur de bus secondaire modérateur modère la communication entre le souscripteur de bus secondaire émetteur (5) et le souscripteur de bus primaire récepteur (3) ou **en ce que**, dans l'état de panne du souscripteur de bus secondaire émetteur (5), le souscripteur de bus secondaire modérateur est désactivé et le souscripteur de bus primaire modérateur modère la communication entre le souscripteur de bus primaire émetteur (2) et le souscripteur de bus secondaire récepteur (6).

8. Système de bus (1) selon la revendication 7, **caractérisé en ce que** le souscripteur de bus primaire modérateur et le souscripteur de bus secondaire modérateur sont réalisés sous la forme de souscripteurs de bus séparés,
ou **en ce que** le souscripteur de bus primaire modérateur et le souscripteur de bus secondaire modérateur sont prévus dans l'unité de commutation (9),
ou **en ce que** le souscripteur de bus primaire modérateur est mis en œuvre dans le souscripteur de bus primaire émetteur (2) et le souscripteur de bus secondaire modérateur est mis en œuvre dans le souscripteur de bus secondaire émetteur (5).

9. Système de bus (1) selon l'une des revendications 1 à 8, **caractérisé en ce qu'**il est prévu une seconde unité de commutation (12), **en ce que** la première unité de commutation (9) est mise en œuvre dans le souscripteur de bus primaire émetteur (2) et **en ce que** la seconde unité de commutation (12) est mise en œuvre dans le souscripteur de bus secondaire émetteur (5) et **en ce qu'**en outre l'une des trois variantes suivantes est réalisée :
• la première unité de commutation (9) et la seconde unité de commutation (12) sont reliées au dispositif de commutation (10) par l'intermédiaire d'un canal de commutation (13) respectif et commutent le dispositif de commutation (10) par l'intermédiaire du canal de commutation (13) respectif,
• le dispositif de commutation (10) est relié au canal de communication de surveillance (8) et la première unité de commutation (9) et la seconde unité de commutation (12) commutent le dispositif de commutation (10) par l'intermédiaire du canal de communication de surveillance (8),
• la première unité de commutation (9) commute le dispositif de commutation (10) par l'intermédiaire du premier bus de données (4) et la seconde unité de commutation (9) commute le dispositif de commutation (10) par l'intermédiaire du second bus de données (7).

10. Système de bus (1) selon l'une des revendications 1 à 9, **caractérisé en ce que** l'unité de commutation (9) - ou les unités de commutation (9, 12) - est - ou sont - conçue(s) de telle sorte qu'elle détecte - ou qu'elles détectent - de manière autonome un état de panne du souscripteur de bus primaire émetteur (2) ou du souscripteur de bus secondaire émetteur (5), ou **en ce que** le souscripteur de bus primaire émetteur (2) et le souscripteur de bus secondaire émetteur (5) sont conçus de telle sorte que, dans l'état de panne de l'un des souscripteurs de bus (5, 2) émetteurs, ils envoient un signal de panne à l'unité de commutation (9) - ou aux unités de commutation (9, 12).

11. Système de bus (1) selon l'une des revendications 1 à 10, excepté la revendication 6, **caractérisé en ce qu'**il est prévu une seconde unité de commutation (12) et un second dispositif de commutation (14), **en ce que** la première unité de commutation (9) et le premier dispositif de commutation (10) sont mis en œuvre dans le souscripteur de bus primaire émetteur (2) et **en ce que** la seconde unité de commutation (12) et le second dispositif de commutation (14) sont mis en œuvre dans le souscripteur de bus secondaire émetteur (5), et **en ce que** le souscripteur de bus primaire émetteur (2) peut être relié au second bus de données (7) et peut être séparé du second bus de données (7) par l'intermédiaire du premier dispositif de commutation (10) et **en ce que** le souscripteur de bus secondaire émetteur (5) peut être relié au premier bus de données (4) et peut être séparé du premier bus de données (4) par l'intermédiaire du second dispositif de commutation (14).

12. Système de bus (1) selon l'une des revendications 1 à 11 excepté la revendication 2, **caractérisé en ce que** le souscripteur de bus primaire émetteur (2) et le souscripteur de bus secondaire émetteur (5) sont conçus de telle sorte que, lors de l'initialisation du système de bus (1), ils échangent des données pour la configuration et/ou pour la commande des souscripteurs de bus (3, 6) récepteurs et/ou des informations de caractérisation des souscripteurs de bus (3, 6) récepteurs par l'intermédiaire du premier bus de données (4) et du second bus de données (7), le premier bus de données (4) et le second bus de données (7) étant reliés entre eux par l'intermédiaire du dispositif de commutation (10) lors de l'initialisation du système de bus (1), et **en ce que** l'unité de commutation (9) est conçue de telle sorte qu'après l'échange des données, elle sépare le premier bus de données (4) et le second bus de données (7) par l'intermédiaire du dispositif de commutation (10),
ou **en ce que** le souscripteur de bus primaire émetteur (2) et le souscripteur de bus secondaire émetteur (5) sont conçus de telle sorte que, lors de l'initialisation du système de bus (1) et/ou en cours de fonctionnement du système de bus (10), ils échangent des données pour la configuration et/ou pour la commande des souscripteurs de bus (3, 6) récepteurs et/ou des informations de caractérisation des souscripteurs de bus (3, 6) récepteurs par l'intermédiaire du canal de communication de surveillance (8).

13. Système de bus selon l'une des revendications 2 à 11, **caractérisé en ce que** le souscripteur de bus primaire émetteur (2) et le souscripteur de bus secondaire émetteur (5) sont conçus de telle sorte que, lors de l'initialisation du système de bus (1) et/ou en cours de fonctionnement du système de bus (10), ils envoient des données pour la configuration et/ou pour la commande des souscripteurs de bus (3, 6) récepteurs et/ou des informations de caractérisation des souscripteurs de bus (3, 6) récepteurs au souscripteur de bus émetteur (16) de remplacement par l'intermédiaire du canal de communication de surveillance (8).

14. Système de bus (1) selon l'une des revendications 1 à 13, **caractérisé en ce que** le souscripteur de bus primaire émetteur (1) est conçu de telle sorte que, dans l'état de panne du souscripteur de bus secondaire émetteur (5), il fait passer le souscripteur de bus secondaire récepteur (6) dans un mode de suivi afin que le souscripteur de bus secondaire récepteur (6) exécute les instructions de commande adressées au souscripteur de bus primaire récepteur (3), ou **en ce que** le souscripteur de bus secondaire émetteur (5) est conçu de telle sorte que, dans l'état de panne du souscripteur de bus primaire émetteur (2), il fait passer le souscripteur de bus primaire récepteur (3) dans un mode de suivi afin que le souscripteur de bus primaire récepteur (3) exécute les instructions de commande adressées au souscripteur de bus secondaire récepteur (6).

15. Système de bus (1) selon l'une des revendications 1 à 14, **caractérisé en ce que** l'unité de commutation (9) est conçue de telle sorte qu'elle relie le premier bus de données (4) et le second bus de données (7) par l'intermédiaire du dispositif de commutation (10) lorsque le souscripteur de bus primaire émetteur (2) ou le souscripteur de bus secondaire émetteur (5) se trouve dans un état d'erreur, ou qu'une réaction demandée de l'un des deux souscripteurs de bus (2, 5) émetteurs est absente, ou que l'un des deux souscripteurs de bus émetteurs (2, 5) est désactivé.
